**Europäisches Patentamt**

**European Patent Office**

**Office européen des brevets**

(19)

(11) Veröffentlichungsnummer: **0 432 816 A2**

(12)

# EUROPÄISCHE PATENTANMELDUNG

(21) Anmeldenummer: **90202971.9**

(22) Anmeldetag: **09.11.90**

(51) Int. Cl.5 **G11B 15/44**, G11B 15.093, G11B 15/18

(30) Priorität: **15.11.89 DE 3937908**
**15.10.90 DE 4032643**

(43) Veröffentlichungstag der Anmeldung:
**19.06.91 Patentblatt 91/25**

(84) Benannte Vertragsstaaten:
**DE FR GB IT**

(71) Anmelder: **Philips Patentverwaltung GmbH**
**Wendenstrasse 35 Postfach 10 51 49**
**W-2000 Hamburg 1(DE)**

(84) **DE**

Anmelder: **N.V. Philips' Gloeilampenfabrieken**
**Groenewoudseweg 1**
**NL-5621 BA Eindhoven(NL)**

(84) **FR GB IT**

(72) Erfinder: **Kunze, Norbert**
**Mozartstrasse 7**
**W-6332 Ehringshausen(DE)**
Erfinder: **Weber, Georg**
**Hauptstrasse 33**
**W-3552 Lohra(DE)**

(74) Vertreter: **Kupfermann, Fritz-Joachim,**
**Dipl.-Ing. et al**
**Philips Patentverwaltung GmbH**
**Wendenstrasse 35 Postfach 10 51 49**
**W-2000 Hamburg 1(DE)**

(54) **Magnetbandkassettengerät mit einem Laufwerk für Magnetbandkassetten (Transportstange).**

(57) Die Erfindung bezieht sich auf ein Magnetbandkassettengerät mit einem Laufwerk für Magnetbandkassetten, das für Spiel- und Schnellspulbetrieb mit einer ersten und einer gegenläufigen zweiten Bandlaufrichtung ausgelegt ist, wozu außer einem ersten und einem zweiten, wahlweise antreibbaren Wickelteller (17a, 7b) für das Magnetband eine erste und eine zweite, von einem Motor in unterschiedlicher Drehrichtung antreibbare Tonwelle (13a, 13b) vorgesehen sind, und welches Magnetbandkassettengerät einen Umschaltmechanismus (68) mit einer verschieblichen Transportstange (98) aufweist, mittels der der Wickeltellerantrieb zur Änderung der Bandlaufrichtung von einem Wickelteller zum anderen Wickelteller umschaltbar ist, wobei die Transportstange (98) mit in Verschieberichtung auf Abstand angeordneten Zahnstangenabschnitten (98a, 98b) versehen ist, wobei die Zahnstangenabschnitte (98a, 98b) zum Verschieben der Transportstange (98) wahlweise mit gegenläufig umlaufenden Antriebszahnrädern zusammenwirken und daß die Transportstange (98) derart quer zur Verschieberichtung kippbar gelagert ist, daß der jeweilige Zahneingriff zwischen einem Zahnstangenabschnitt (98a, 98h) und einem Antriebszahnrad (47a, 47b) im Endbereich der Verschiebung durch ein Herauskippen der Transportstange (98) aus dem Zahneingriff aufgehoben wird, wobei das Herauskippen und die Rückstellung in eine neutrale Mittelstellung mittels einer Rückstellfeder (107) bewirkt wird, die beim Querverschieben vorgespannt wird.

FIG. 1a

FIG. 1c

FIG 1b

## MAGNETBANDKASSETTENGERÄT MIT EINEM LAUFWERK FÜR MAGNETBANDKASSETTEN (TRANSPORTSTANGE)

Die Erfindung bezieht sich auf ein Magnetbandkassettengerät mit einem Laufwerk für Magnetbandkassetten, das für Spiel- und Schnellspulbetrieb mit einer ersten und einer gegenläufigen zweiten Bandlaufrichtung ausgelegt ist, wozu außer einem ersten und einem zweiten, wahlweise antreibbaren Wickelteller für das Magnetband eine erste und eine zweite, von einem Motor in unterschiedlicher Drehrichtung antreibbare Tonwelle vorgesehen sind, und welches Magnetbandkassettengerät einen Umschaltmechanismus mit einer verschieblichen Transportstange aufweist, mittels der der Wickeltellerantrieb zur Änderung der Bandlaufrichtung von einem Wickelteller zum anderen Wickelteller umschaltbar ist, wobei die Transsportstange mit in Verschieberichtung auf Abstand angeordneten Zahnstangenabschnitten versehen ist.

Aus der DE-OS 38 36 246 ist ein Umschaltmechanismus mit einer Transportstange bekannt, die in Längsverschieberichtung an beiden Enden mit Zahnstangenabschnitten versehen ist. Durch das Längsverschieben der Transportstange werden Zahnsegmente verstellt, über die den Tonwellen zugeordnete Andruckrollen wechselweise oder ganz von den Tonwellen abhebbar bzw. an die Tonwellen anlegbar sind. Die Betätigung der Transportstange erfolgt über einer Hebelsystem, das sich bei Drehrichtungsänderung des Antriebsmotors umstellt.

Es ist Aufgabe der Erfindung, ein Magnetbandkassettengerät mit einem Laufwerk der eingangs erwähnten Art zu schaffen, bei dem beim Verschieben der Transportstange von der Transportstange die Antriebsumschaltung von dem einen Wickelteller auf den anderen erfolgt bei der Verwendung eines Antriebsmotors, der nur in einer Drehrichtung umläuft.

Die gestellte Aufgabe ist erfindungsgemäß dadurch gelöst, daß die Zahnstangenabschnitte zum Verschieben der Transportstange wahlweise mit gegenläufig umlaufenden Antriebszahnrädern zusammenwirken und daß die Transportstange derart quer zur Verschieberichtung kippbar gelagert ist, daß der jeweilige Zahneingriff zwischen einem der Zahnstangenabschnitte und einem Antriebszahnrad im Endbereich der Verschiebung durch ein Herauskippen der Transportstange aus dem Zahneingriff aufgehoben wird, wobei das Herauskippen und die Rückstellung in eine neutrale Mittelstellung mittels einer Rückstellfeder bewirkt wird, die beim Querverschieben vorgespannt wird.

Die Transportstange löst sich damit nach einem gewissen Verschiebeweg mittels der Rückstellfeder aus der verschiebenden· Verzahnung und wird mittels derselben Rückstellfeder wieder in ihre neutrale Mittelstellung zurückgeführt. Dieser Aufbau ist außerordentlich kleinbauend und spart Bauteile.

Nach einer weiteren Ausgestaltung der Erfindung ist vorgesehen, daß die Rückstellfeder einen Federarm aufweist, der bei seinem Vorspannen gegen einen Druckstift der Transportstange in Herauskipprichtung drückt, während ein anderer Federarm mittels eines Mitnehmers der Transport stange in Rückstellrichtung vorgespannt wird. Jedem der Arme der Rückstellfeder selbst ist so eine der Betriebsfunktionen, wie Verkippen und Rückstellen in die neutrale Mittelstellung. zugewiesen.

Nach einer weiteren Ausgestaltung der Erfindung ist vorgesehen, daß die Transportstange in ihren axialen Endbereichen mit parrallel zu ihrer Längsrichtung und paarweise nebeneinander verlaufenden Leitstiftnuten und Kippnuten versehen ist, die derart miteinander verbunden sind, daß ein beim Querverschieben in eine Leitstiftnut eingelaufener Leitstift im vorgesehenen Kippbereich von der Leitstiftnut in die Kippnut überwechselt, wobei die Transportstange zum Aufheben des Zahneingriffs einerseits durch austreibende Verzahnungskräfte und andererseits unter der Kraft der Rückstellfeder verkippt. Eine Transportstange mit einer derartigen Konfiguration läßt sich ohne Schwierigkeiten in Spritztechnik herstellen. Die Verschiebebewegungen übernehmen die Antriebszahnräder. und die Kippbewegung im zeitlichen und räumlichen Ablauf übernimmt die Rückstellfeder.

Nach einer weiteren Ausgestaltung der Erfindung ist vorgesehen, daß die Rückstellfeder als Haarnadelfeder ausgebildet ist. deren Schenkel, vom Nadelbogen aus gesehen. zunächst einen Lagerstift und in einem Abstand von diesem einen Transportstangenmitnehmer umgreifen. wobei die Schenkel mit Auslegern versehen sind. die mit das Kippen unterstützenden Druckstiften der Transportstange zusammenwirken. Eine solche Haarnadelfeder läßt sich besonders vorteilhaft für die beiden Bewegungsfunktionen, des Verkippens und des Rückstellens in die neutrale Mittelstellung einsetzen.

Nach einer weiteren Ausgestaltung der Erfindung ist vorgesehen, daß an der Transportstange ein Richtstück vorgesehen ist, das mit gerätefesten Leitstücken derart zusammenwirkt, daß das Richtstück die Rückstellbewegung der Transportstange, bevor diese ihre neutrale Mittelstellung erreicht, durch Anschlagen an die Leitstücke abbremst, wodurch die Rückstellfeder eine drehende Wirkung auf die Transportstange ausübt und diese dadurch in die unverschwenkte Normallage zurückschwenkt

in der die Anschlagwirkung verlorengeht und die Transportstange dann in ihre neutrale Mittelstellung geschoben und verriegelt werden kann.

Die Erfindung wird anhand der Zeichnung näher erläutert. Es Zeigen:

Fig. 1a und b in einer Getriebe- und einer Schaltebene das Laufwerk eines Magnetbandkassettengerätes für Reverse-Betrieb mit einer Einrichtung für den logischen schnellen Vor- und Rücklauf, in einer Stellung für Rückwärts-Spiel(Reverse-Play)-Betrieb,

Fig. 1c eine Kupplungsdarstellung des Laufwerkes nach Fig. 1a/b im Schnitt,

Fig. 2a und b in einer Getriebe- und einer Schaltebene das Magnetbandkassettengerät nach Fig. 1 bei eingeschaltetem schnellem Vorlauf aus dem Rückwärts-Spiel(Reverse-Play)-Betrieb,

Fig. 3a und b in einer Getriebe- und einer Schaltebene das Magnetbandkassettengerät nach Fig. 1 bei eingeschaltetem schnellem Rücklauf aus dem Rückwärts-Spiel(Reverse-Play)-Betrieb,

Fig. 4a und b in einer Getriebe- und einer Schaltebene das Laufwerk nach Fig. 1 nach der Umschaltung vom Reverse-Spiel-Betrieb in den Vorwärts-Spiel-Betrieb,

Fig. 5a und b in einer Getriebe- und einer Schaltebene das Laufwerk in der Schaltstellung für schnellen Vorlauf aus dem Vorwärts-Spiel-Betrieb,

Fig. 6a und b in einer Getriebe- und einer Schaltebene das Laufwerk in der Schaltstellung für schnellen Rücklauf aus dem Vorwärts-Spiel-Betrieb,

Fig. 7 das Laufwerk während des Umschaltens vom Vorwärts-Spiel- in den Rückwärts-Spiel-Betrieb,

Fig. 7a bis 7d in Bewegungsstufen eine während des Umschaltvorganges seitlich abkippende Transportstange, die wieder in ihre neutrale Stellung zurückgedrängt wird,

Fig. 7e die zum Umschalten der Laufwerksdrehrichtung eingesetzten Hebel,

Fig. 7f das Laufwerk während des Entrastvorganges bei Bandende im Obergang vom Schnellvorlauf im Vorwärtsbetrieb (SVL-NOR) in dem Rückwärtsspielbetrieb (REV-Play),

Fig. 8a das Laufwerk mit der Kopfplatte in der Eject-Stellung,

Fig. 8b das Laufwerk mit der Kopfplatte in der Spiel-Stellung,

Fig. 8c das Laufwerk mit der Kopfplatte in der Schnellspul- bzw. Stand-by-Stellung,

Fig. 9a die Vorrichtung zur Umstellung der Druckrollen des Laufwerkes in schematischer Darstellung,

Fig. 9b eine vergrößerte Ansicht aus Fig. 9a mit dem Umstellmechanismus,

Fig. 10a den Mechanismus zur Kopfplattenverstellung in Eject-Stellung des Kassetten-Auswurf-Mechanismus,

Fig. 10b den Mechanismus nach Fig. 10a in Spiel-Stellung,

Fig. 11 eine vergrößerte Darstellung einer Führungsbahn für eine Stangenführung für Manual-Reverse,

Fig. 12a bis c einen Lademechanismus für eine Magnetbandkassette, in drei verschiedenen Funktionsstellungen,

Fig. 13 eine Motorschaltvorrichtung des Laufwerkes,

Fig. 14 einen Teil eines Umschaltmechanismus für die manuelle Richtungsumkehr,

Fig. 15a und 15b eine Vorrichtung zum Erreichen einer bevorzugten Spielrichtung nach dem Einschieben einer Kassette.

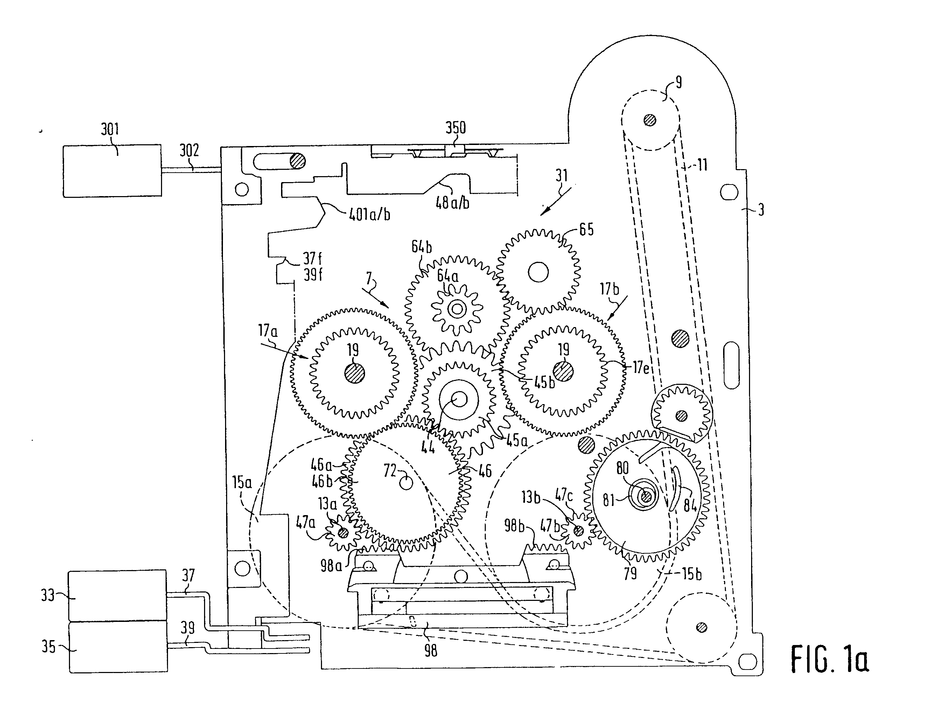

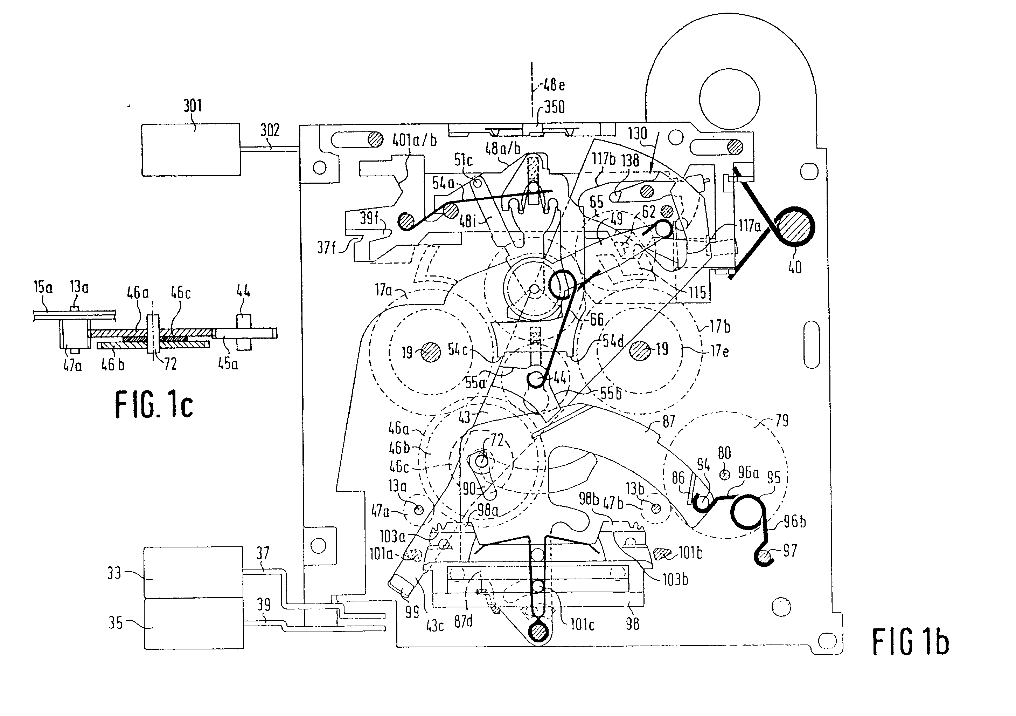

Das Magnetbandkassettengerät weist ein Laufwerk (Fig. 1a und b) mit einer Chassisplatte 3 auf, an der alle Geräteaufbauten und Bauteile des Laufwerkes befestigt sind. Dazu gehören ein Lademechanismus 5 und ein Spielmechanismus. Zum Spielmechanismus gehört ein Antriebsmotor 9, der über eine Peese 11 Tonwellen 13a und 13b antreibt. Die Tonwellen 13a und 13b sind mit Schwungscheiben 15a und 15b verbunden. Zum Spielmechanismus gehören weiterhin Wickelteller 17a, 17b, die mit Wickelwellen 19 zum Antreiben von Wickeldornen 330 dienen.

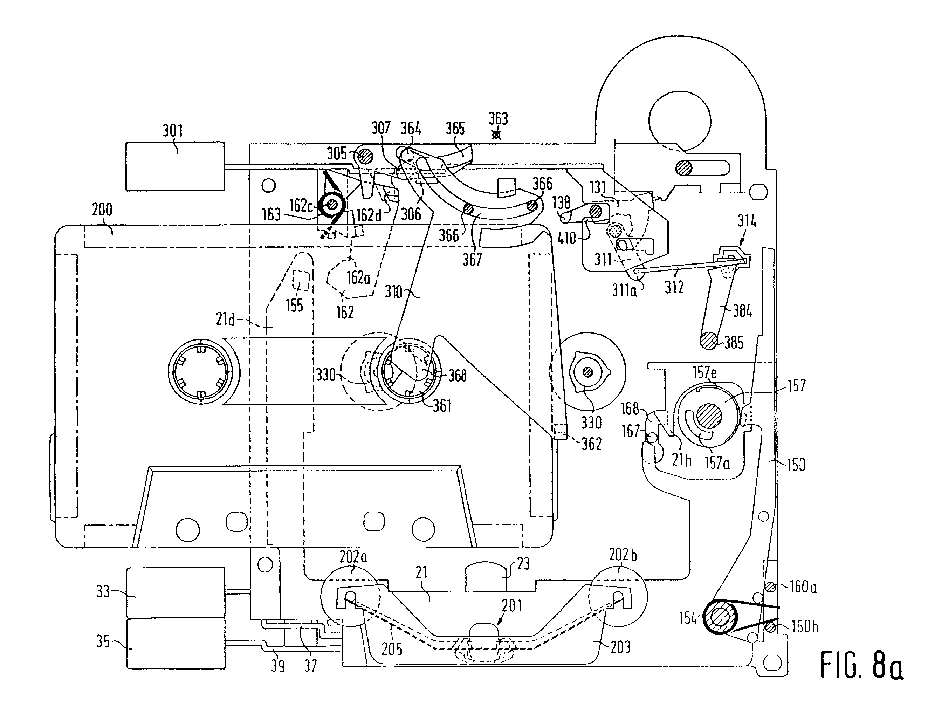

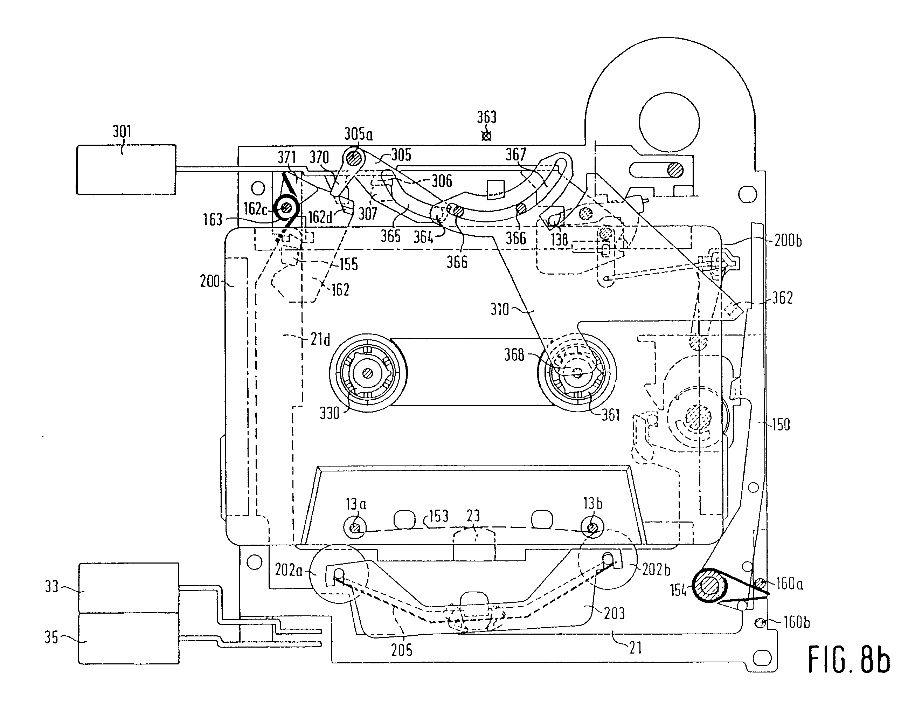

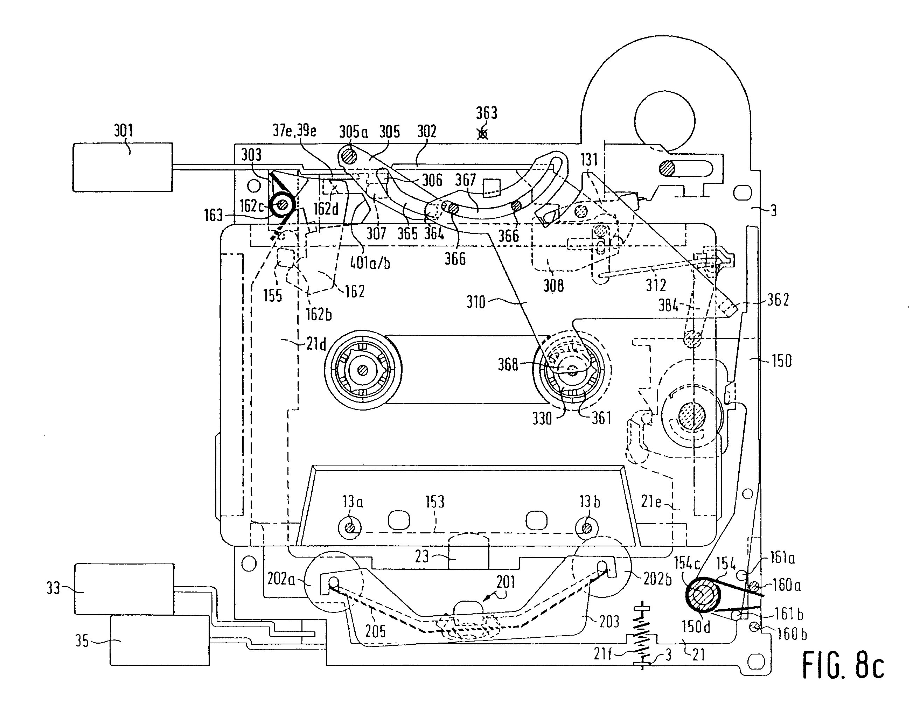

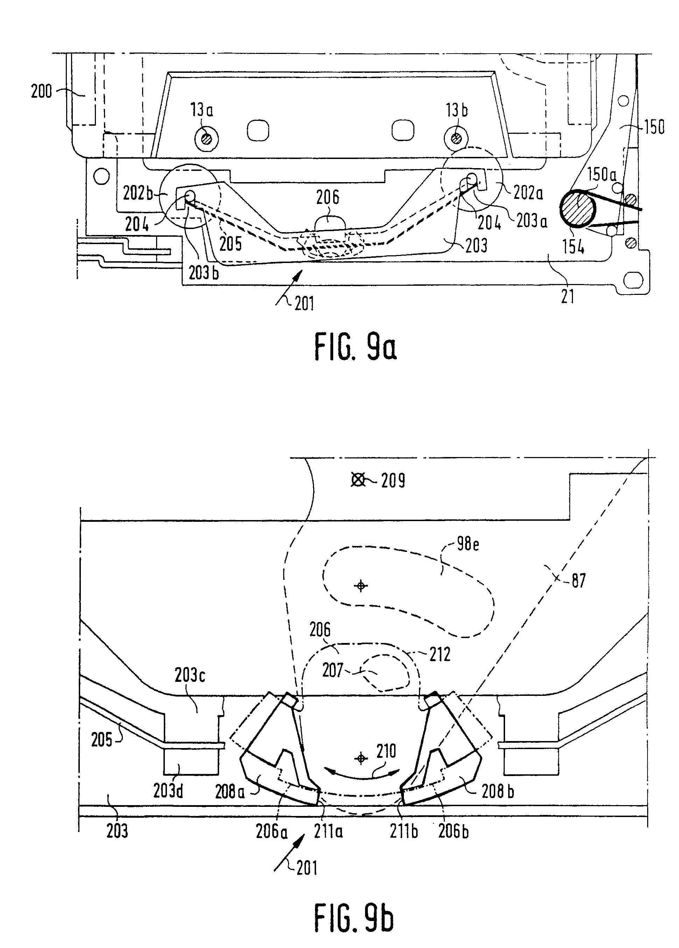

Zum Spielmechanismus gehört weiterhin eine Kopfplatte 21 mit einem Tonkopf 23 (Fig. 8). Diese Kopfplatte 21 ist quer zur Kassetteneinschubrichtung 25 verschieblich. Zum Transportieren des Magnetbandes 153 sind Druckrollen 202a, 202b (Fig. 9) vorgesehen, die entsprechend der Bandzug richtung an die eine oder andere Tonwelle 13a, 13b andrückbar sind. Zum Andrücken dient eine Andruckrollensteuerung 201.

## Antriebsmechanismus mit Getriebe für Reversieren und Schnellspulen

In Fig. 1a und b sind Drucktasten für eine Schnellspuleinrichtung 31 dargestellt und zwar eine Taste 33 für schnellen Rücklauf und eine Taste 35 für schnellen Vorlauf. Zur Taste 33 gehört eine Tastenstange 37 für schnellen Rücklauf, und zur Taste 35 für schnellen Vorlauf gehört eine Tastenstange 39. Beide Tastenstangen 37, 39 sind mittels einer Feder 40 in Ausschieberichtung belastet. Beide Tastenstangen 37, 39 sind mit Leitkonturen 41a, b, 42a, b versehen, die verstellend auf die Schnellspuleinrichtung 31 einwirken können.

Die Schnellspuleinrichtung 31 weist einen Zentral-Schalthebel 43 auf, der einen ersten Schalthebel bildet und um eine zentrale Achse 44 schwenkbar ist, um die auch ein Zwischenrad 45 drehbar ist. Das Zwischenrad 45 besteht aus zwei übereinander angeordneten, starr miteinander verbundenen Zahnrädern 45a, b. Die zentrale Achse 44 ist in der Chassisplatte 3 in einem Schlitz 44a verschiebbar gelagert.

Auf dem Zentral- Schalthebel 43 ist ein als Antriebsrad für die Wickelteller 17a, 17b und die Schnellspuleinrichtung 31 dienendes Kupplungs-Doppelrad 46 um eine Kupplungsachse 72 drehbar gelagert. Wie Fig. 1c zeigt, besteht dieses Kupplungs-Doppelrad 46 aus zwei auf der Achse 72 angeordneten Zahnrädern, einem Kupplungsprimärrad 46a und einem Kupplungssekundärrad 46b, die gegeneinander verdrehbar sind. Das Primärrad 46a dient als Antriebszahnrad, das von den Schwungscheiben-Zahnrädern 47a oder b der Tonwellen 13a, 13b kämmend antreibbar ist. Das Sekundärrad 46b wirkt als Abtriebszahnrad. Das Kupplungsprimärrad 46a und das Kupplungssekundärrad 46b sind mittels einer Kupplung 46c miteinander reibschlüssig verbunden.

Zur Schnellspuleinrichtung 31 gehört ein zweiter Schalthebel 48, an dem wiederum verschwenkbar ein dritter Schalthebel 49 gelagert ist.

In der Chassisplatte 3 ist ein vorzugsweise aus zwei fluchtenden Teilen 50a, 50b bestehender Führungsschlitz vorgesehen, in den Führungsstifte 51, 51a des zweiten Schalthebels 48 eingreifen. Ein weiterer Schlitz 53 des Chassis, in dem ein Führungsstift 53a läuft, weist eine fächerförmige Führungskontur auf, die eine zulässige Schwenkbewegung des Führungsstiftes 53a nach links und rechts begrenzt. Der zweite Schalthebel 48 ist aufgeteilt in einen geradlinig, mittels der Führungsstifte 51, 51a in den Schlitzteilen 50a, 50b geführten Schalthebelteil 48f und einen am geradlinig geführten Schalthebelteil 48f schwenkbar gelagerten Schalthebelteil 48g. Die Schwenkbewegung des schwenkbaren Schalthebelteiles 48g erfolgt je nach Drehrichtung um beiderseits einer Symmetrielinie 48e versetzt angeordnete Achsköpfe 52a oder 52b, die je nach Schwenklage in Lagermulden 52c, 52d des geradlinig geführten Teiles 48f des zweiten Schalthebels 48 drehen können. Auf diese Weise ist es möglich, eine durchgängige Schwenkbewegung des schwenkbaren Teiles 48g des zweiten Schalthebels 48 von einer Endlage (SVL im Vorwärtsspiel betrieb) in eine andere Endlage (SVL im Rückwärtsspielbetrieb) zu erreichen, ohne daß der Achsabstand und damit der Zahneingriff der Räder 45 und 64a unzulässig verändert wird.

Der schwenkbare Schalthebelteil 48g trägt an seinem inneren Ende 48h den Führungsstift 53a und an einem Ausleger 48i einen Anschlag 51c, der mit Konturen der Tastenstangen 37, 39 zusammenwirkt. Der von den Führungsstiften 51 und 51a geradlinig geführte Schalthebelteil 48f wirkt mit Stellköpfen 54c, 54d auf Anschlagkanten 55a 55b des Zentral-Schalthebels 43 und kann diesen unter der Wirkung von Stellkonturen 48a, 48b der Tastenstangen 37, 39 verschieben und verdrehen. Eine Feder 54a belastet den zweiten Schalthebel 48 ständig in Ausfahrrichtung. Der zweite Schalthebel 48 kann ein Kunststoffteil sein, das beispielsweise in Outsert-Moulding-Technik auf die Chassisplatte 3 verschiebbar aufgespritzt ist. Der dritte Schalthebel 49 ist um den Führungsstift 53a verschwenkbar am schwenkbaren Schalthebelteil 48g gelagert; er trägt zwei Stifte 61, 62. die mit den Leitkonturen 41a, 41b bzw. 42a, 42b der Tastenstangen 37, 39 zusammenwirken.

Um den Führungsstift 53a, um den der dritte Schalthebel 49 am zweiten Schalthebelteil 48g verschwenkbar ist, ist ein koaxialer Zahnradsatz 64 drehbar. Dieser koaxiale Zahnradsatz 64. der aus zwei starr miteinander verbunden Zahnrädern 64a, 64b besteht, kämmt ständig mit dem Schnell-Rücklaufzahnrad 65, das auf dem dritten Schalthebel 49 gelagert und ebenso wie das Zahnrad 64b mit den Wickeltellern 17a und 17b in Eingriff bringbar ist. Eine Zugfeder 66 greift mit einem Ende an dem Stift 61 des dritten Schalthebels 49 an, während ihr anderes Ende an der Zentralachse 44 befestigt ist.

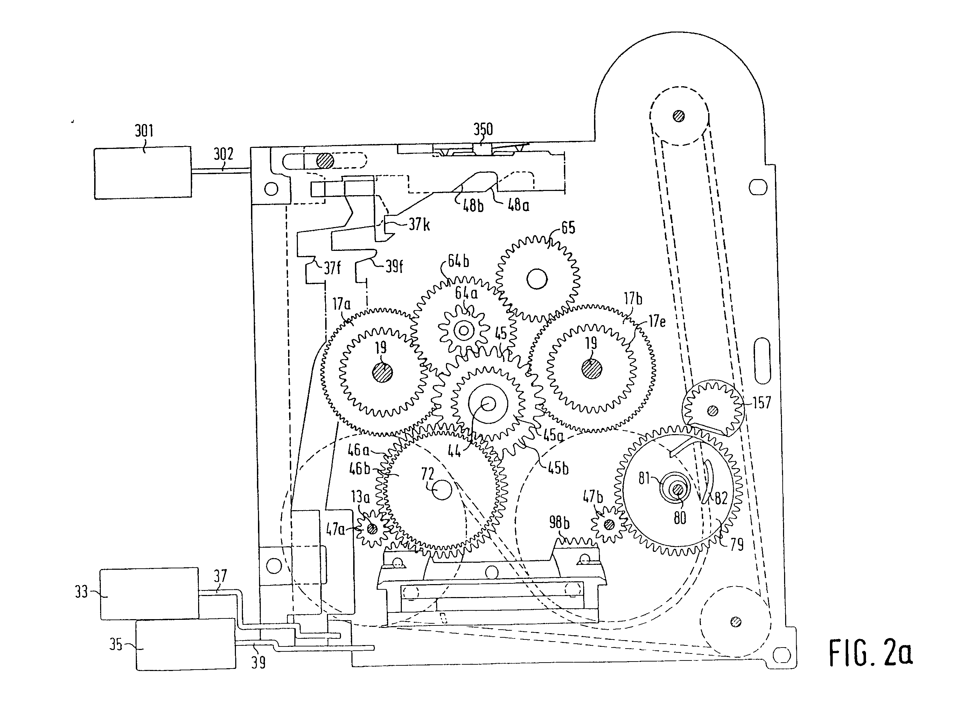

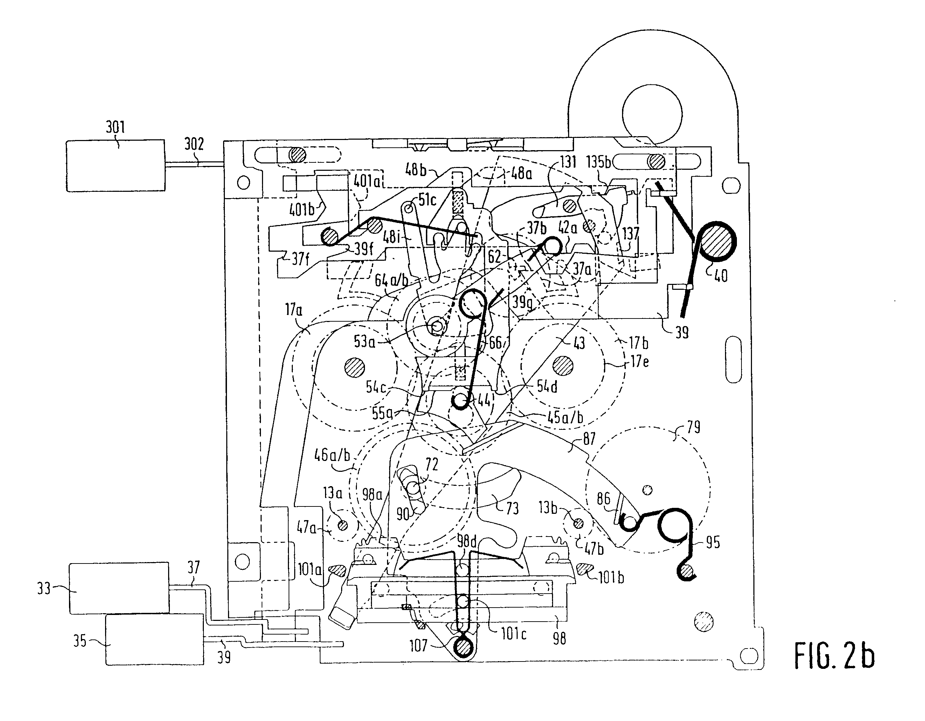

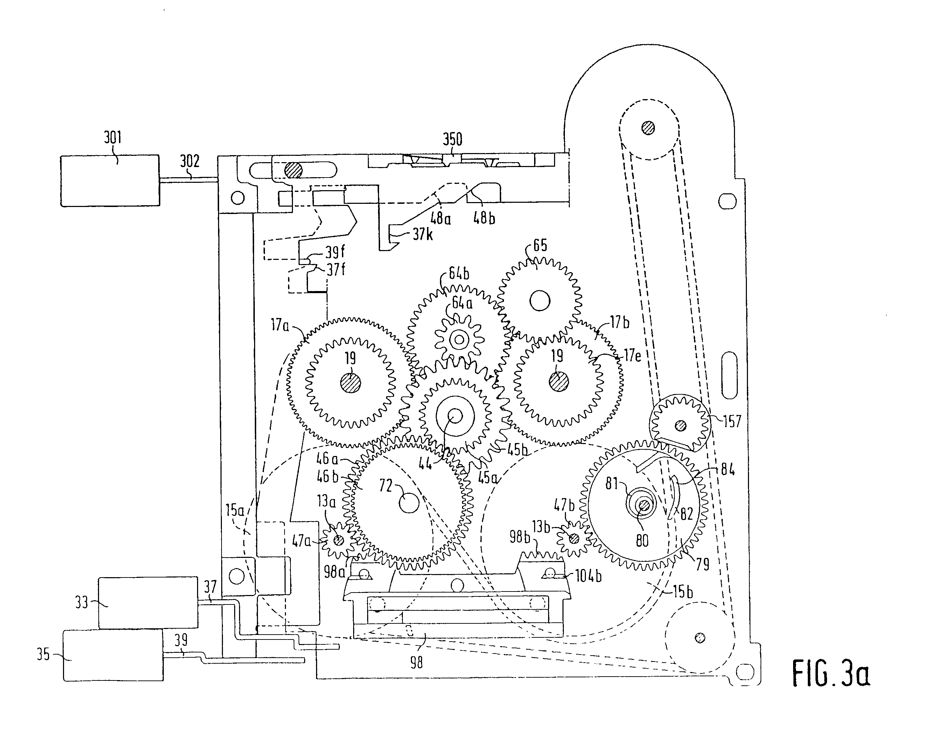

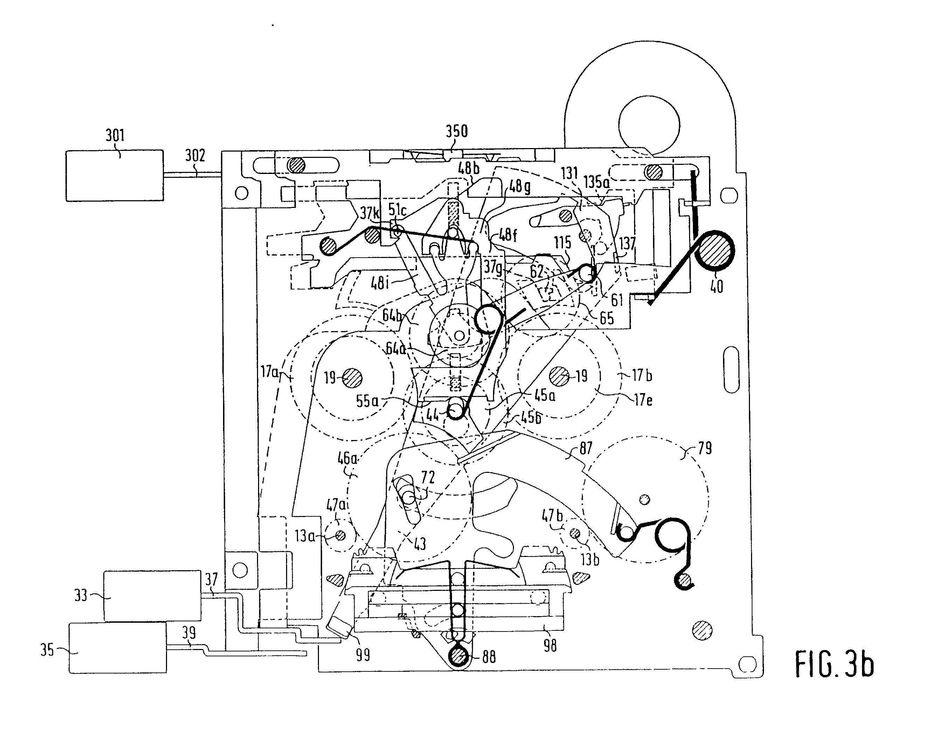

Während des normalen Spielbetriebes (Play) wird das Magnetband entweder in Vorwärtsrichtung, d.h. die rechte Tonwelle 13b zieht das Magnetband und der rechte Wickelteller 17b wickelt es auf, oder in Rückwärts(Reverse)-Richtung am Tonkopf 23 vorbei gezogen. Im letzteren Fall zieht die linke Tonwelle 13a, und der linke Wickelteller 17a wickelt auf. In den Fig. 1 bis 3 befindet sich das Laufwerk im Rückwärts-Spiel(Reverse-Play)-Betrieb, d.h. die Tonwelle 13a zieht das Magnetband und der linke Wickelteller 17a wickelt auf. Aus diesem Rückwärts-Spiel-Betrieb heraus werden der schnelle Vorlauf (SVL) in Fig. 3 und der schnelle Rücklauf (SRL) in Fig. 2 betrachtet.

## Schnellauf im Rückwärts-Spiel(Reverse-Play)-Betrieb

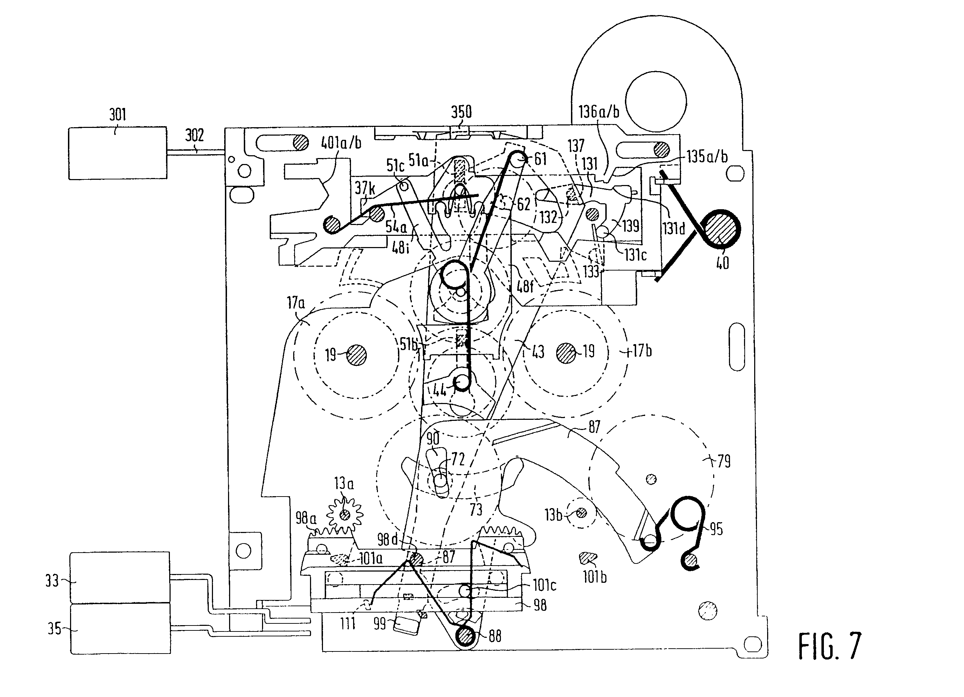

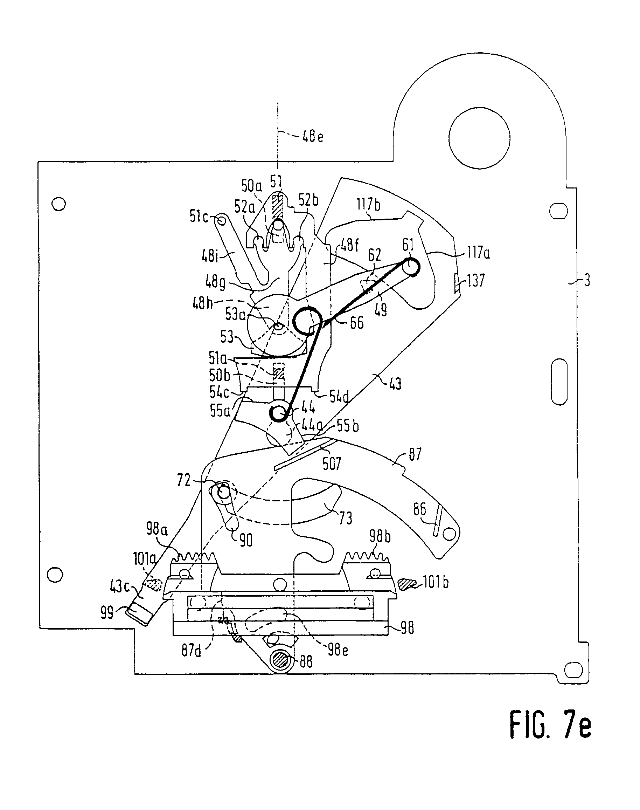

Wünscht der Benutzer im Rückwärts-Spiel-Betrieb ein Schnellspulen, dann wird dieses durch das Drücken einer der Schnellspultasten 33. 35 von der Schnellspuleinrichtung 31 bewirkt mittels des Zentral-Schalthebels 43, des zweiten Schalthebels 48 und des dritten Schalthebels 49. Die Schalthebel 43, 48 und 49 sind in Fig. 7e der besseren Übersicht wegen herausgezogen dargestellt. Das Zusammenwirken dieser Hebel 43, 48, 49 in Verbindung mit dem Kupplungs-Doppelradsatz 46a, b, dem Zwischenrad 45. dem Doppelzahnrad 64a, b und dem Schnell-Rücklaufzahnrad 65 in Verbindung mit den Wickeltellern 17a oder 17b führt nach Maßgabe der eingedrückten Taste 33 oder 35 zu einem schnellen Vorlauf (SVL) oder einem schnellen Rücklauf (SRL). Die Funktionsweise ist dabei wie folgt:

Zum schnellen Vorlauf im Rückwärts-Spiel-Betrieb wird entsprechend der Darstellung nach Fig. 2a und b die Taste 35 für schnellen Vorlauf gedrückt. Die Verstellkontur 48a der Tastenstange 39 drückt den zweiten Schalthebel 48 nach innen, womit auch die Stellköpfe 54c, 54d nach innen fahren, über die Kanten 55a, 55b den Schalthebel 43 in der Nähe der Zentralachse 44 nach unten drücken und gleichzeitig verdrehen. Beim Einschieben der Tastenstange 39 läuft gleichzeitig der Stift 61 auf der Leitkontur 42a. Der Stift 62 klappt dabei aus dem Bereich der SRL-Verriegelungskontur 37g heraus und legt sich auf deren obere Begrenzungswand 37b. Dadurch können der Teil 48g des zweiten Schalthebels 48 und der dritte Schalthebel 49 unter Wirkung der Kraft der Feder 66 im Uhrzeigersinn so weit verschwenken, bis der Führungsstift 53a an der Führungskontur 53 anschlägt. Im weiteren Verlauf der eindrückenden Tastenbewegung geht das SVL-Rad 64 mit dem Rückwärtswickelteller 17a in Eingriff. Der dritte Schalthebel 49 fällt hinter die SVL-Verriegelungskontur 39g. Der dritte Schalthebel 49 verschwenkt infolgedessen so weit gegen den Uhrzeigersinn, daß die Verzahnung des Schnell-Rücklaufzahnrades 65 nicht mit dem rechten Wickelteller 17b in Eingriff geht. Der Schalthebel 43 wird dabei ein wenig entgegen dem Uhrzeigersinn verschwenkt. Die Bewegung entgegen dem Uhrzeigersinn kommt durch das Verschwenken des Schalthebels 43 um die Zentralachse 44 und deren Verschiebung im Schlitz 44a zustande. Das Kupplungsdoppelrad 46a, b wurde vom Wickelteller 17a weggezogen und statt dessen der Zahnradsatz 64a, b auf den linken Wickelteller 17a geschaltet, wobei die Kraftübertragung vom Zwischenrad 45 auf den kleinen Zahnkranz 64a des Zahnradsatzes 64a, b erfolgt. Der schnelle Vorlauf läßt sich wieder lösen durch das Eindrücken der Tasten 33 für schnellen Rücklauf. Dabei drückt eine Lösekontur 135b der Taststange 37, eine Klinke 131 einer Arretiervorrichtung 130 in eine mittlere Freistellung zurück (Darstellung in Fig. 3b). Der Arretiervorrichtung wird später noch beschrieben.

In Fig. 3a und b sind die Eingriffsverhältnisse für den schnellen Rücklauf im Rückwärts-Spiel-Betrieb dargestellt. Der schnelle Rücklauf läßt sich erreichen durch das Eindrücken der Taste 33 mit der zugehörigen Tastenstange 37. Beim Drücken der Taste 33 läuft der Stift 61 an der Leitkontur 41a ab, und der dritte Schalthebel 49 schwenkt im Uhrzeigersinn. Der Stift 62 fällt in die SRL-Fangkontur 37g des Chassis 43 ein und hält ihn damit in dieser Stellung gesichert fest. Der geradlinig geführte Schalthebelteil 48g wird von der Verstellkontur 48h der Tastenstange 37 nach innen gedrückt gegen die Kante 55 des Zentral-Schalthebels 43. Der Zentral-Schalthebel 43 schwenkt, da er zugleich im Längsschlitz 44a verrutscht, gegen den Uhrzeigersinn. Das Kupplungssekundärrad 46h des Kupplungsdoppelrades 46a, b hebt sich damit vom linken Wickelteller 17a ab. Bei dem nun eingeschalteten schnellen Rücklauf treibt das Schwungradzahnrad 47a (Kupplungsprimärrad) über das Antriebszahnrad 46a des Kupplungsdoppelrades 46a, b das Zwischenrad 45, den kleinen Zahnkranz 64a des Zahnradsatzes 64a, b, den großen Zahnkranz 64b des Zahnradsatzes 64 und das Schnell-Rücklaufzahnrad 65 den rechts gelegenen Wickelteller 17b schnell an. Der schnelle Rücklauf wird beendet durch das Eindrücken der Taste 35 für schnellen Vorlauf, die mit ihrer Vorspann-und Lösekontur I35a die Klinke 131 in die Mittelstellung zurückdrückt.

Reversiermechanismus

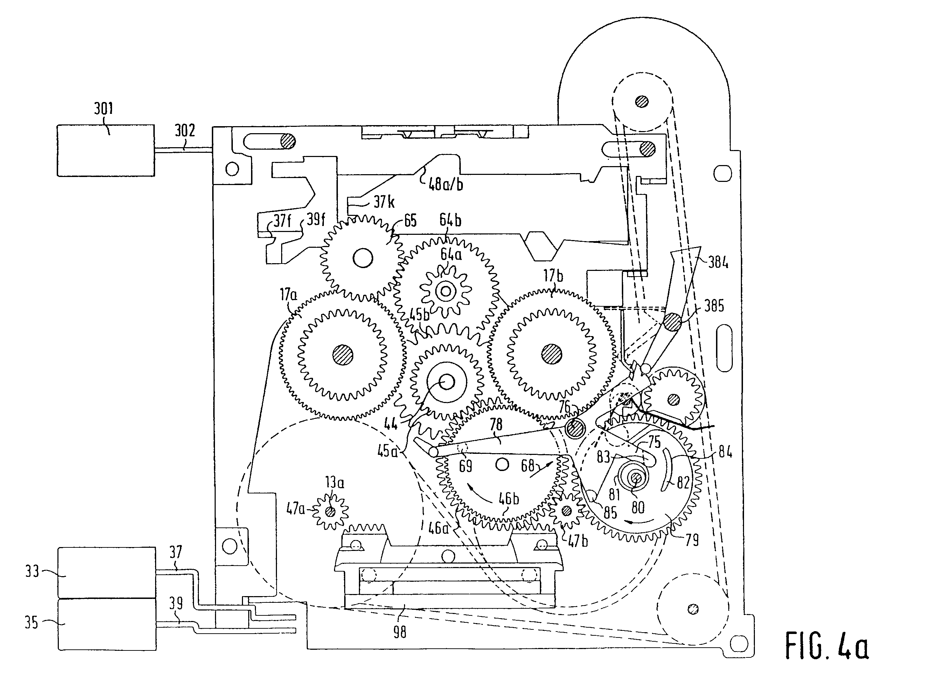

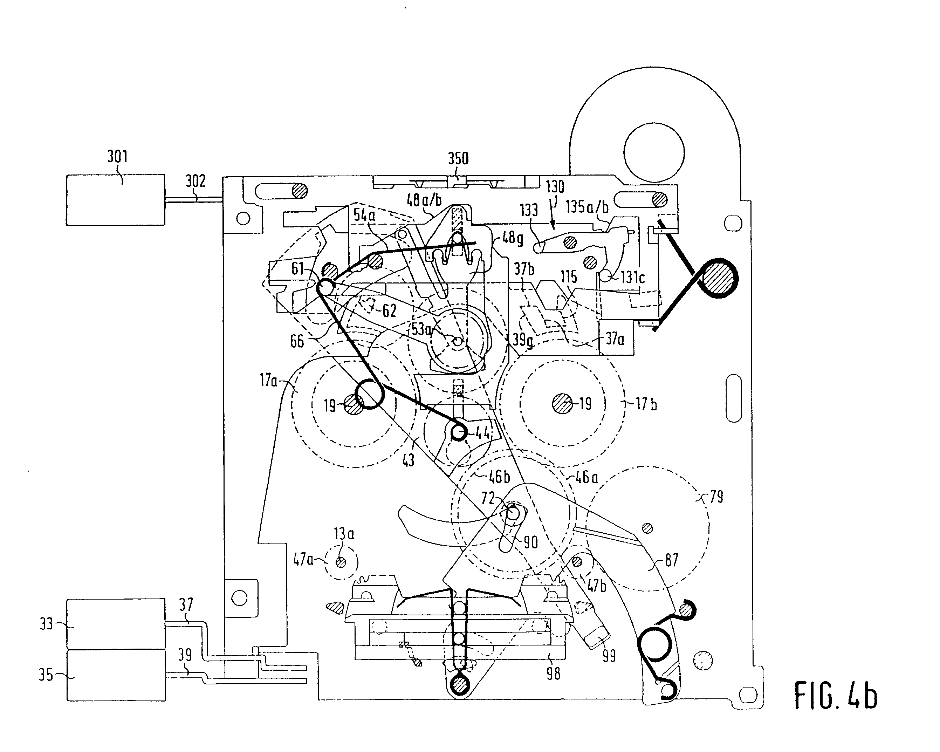

Da es sich bei dem Laufwerk um ein Laufwerk mit reversierendem Bandlauf handelt, muß der Wickeltellerantrieb in beiden Bandzugrichtungen bei Bandstillstand am Bandende umgeschaltet werden, wobei es ein Unterschied ist, ob das Bandende im Spiel-Betrieb oder aus dem Schnellauf heraus erreicht wird. Die Umkehr der Bandzugrichtung und des Bandantriebes erfolgt in beiden Fällen mittels einer Richtungsumkehr-Vorrichtung 68, mittels der der Zentral-Schalthebel 43 um die Zentralachse 44 so verschwenkt wird, daß das Kupplungsdoppelrad 46a, b von der Tonwelle 13a und deren Schwungradzahnrad 47a umgelegt wird auf die Tonwelle 13b mit deren Schwungradzahnrad 47b. Zugleich mit dem Umlegen des Schalthebels 43 dreht der dritte Schalthebel 49 in der Zeichnung von der rechten zur linken Seite des Zentral-Schalthebels 43 um (Fig. 4 bis 6). Der Stift 61 wirkt nach dem Umschwenken mit den Leitkonturen 42b und 41b zusammen. Parallel dazu läuft auch eine Umstellung der Andruckrollen 202a, b ab.

Die Umstellung der Bandlaufrichtung bei Bandende wird anhand von Fig. 1a und b beschrieben. Die Beschreibung geht dabei zuerst vom Erreichen des Bandendes aus dem Rückwärts-Spiel-Betrieb heraus aus. Zeichnungsmäßig wird das Laufwerk von der Darstellung nach Fig. 1 zur Darstellung nach Fig. 4 umgeschaltet. Der Einleitung dieses Umkehrvorganges aus dem Rückwärts-Spiel-Betrieb dient ein Schleifnocken 69, der zu einem Steuerorgan 77 gehört und am Kupplungssekundärrad 48 schleift. Ein Schaltarm 75 des Steuerorgans 77 dient als Schaltarm. Es ist ein Schaltrad 79 vorgesehen, das um seine Achse 80 eine exzentrische, ringförmige Nockenkurve 81 aufweist. Weiterhin ist am Schaltrad 79 eine Schaltkurve 82 vorgesehen, deren Krümmung der Krümmung eines Spiralteiles entspricht. Der Schaltarm 75 weist einen Taster 83 auf, der die Nockenkurve 81 umfahren und auf die Steuerkurve 82 auflaufen kann. Das Schaltrad 79 ist ständig im Eingriff mit dem Schwungradzahnrad 47b der Schwungscheibe 15b bzw. der Tonwelle 13b.

Läuft das Abtriebszahnrad 46b (Kupplungssekundärrad), wie in Fig. 1a und b dargestellt, um, weil der angetriebene Wickelteller 17a bzw. dessen Welle 19 umläuft, dann wird der Arm 78 des Steuerorgans 77 im Uhrzeigersinn durch die Reibkraft zwischen Abtriebsrad 46b und dem Schleifnocken 69 gedreht. Dies hat zur Folge, daß der Taster 83 die Nockenkurve 81 abfährt (Fig. 4a). Bleibt jedoch, beispielsweise infolge des Bandendes, der angetriebene Wickelteller 17a stehen, dann bleibt auch das Abtriebszahnrad 46b stehen, und die beschriebene Reibkraft drückt das Steuerorgan nicht mehr gegen die Nockenkurve 81. Der Wegfall dieser Andruckkraft hat zur Folge, daß der Taster 83 und damit auch der Schaltarm 75 an der höchsten Stelle der Nockenkurve 81 stehen bleiben, wodurch der Taster 83 in den Drehbereich der Schaltkurve 82 gerät. Der Taster 83 läuft nun auf die Steuerfläche 84 der Schaltkurve 82 auf und fährt nach außen. Infolge dieses Nach-Außen-Fahrens drückt ein Steuerstift 85 des Steuerorganes 77 gegen eine Anschlagfläche 86 einer Umkehrplatte 87, die um eine Achse 88 verschwenkbar ist. Die Umkehrplatte 87 schwenkt beim Anschlagen des Steuerstiftes 85 gegen die Anschlagfläche 86 im Uhrzeigersinn. Die Kupplungsachse 72, die ständig durch einen Schlitz 90 der Umkehrplatte 87 greift, wird von der schwenkenden Umkehrplatte 87 in Richtung auf die andere Tonwelle 13b gedrückt, womit der Schalthebelarm 43c des Zentral-Schalthebels 43 gezwungen wird, ebenfalls in Richtung auf die Tonwelle 13b zu schwenken.

Vor einer weiteren Beschreibung des Umkehrvorganges bei Bandstillstand wird der Aufbau der nun wirksam werdenden Richtungsumkehrvorrichtung 68 beschrieben.

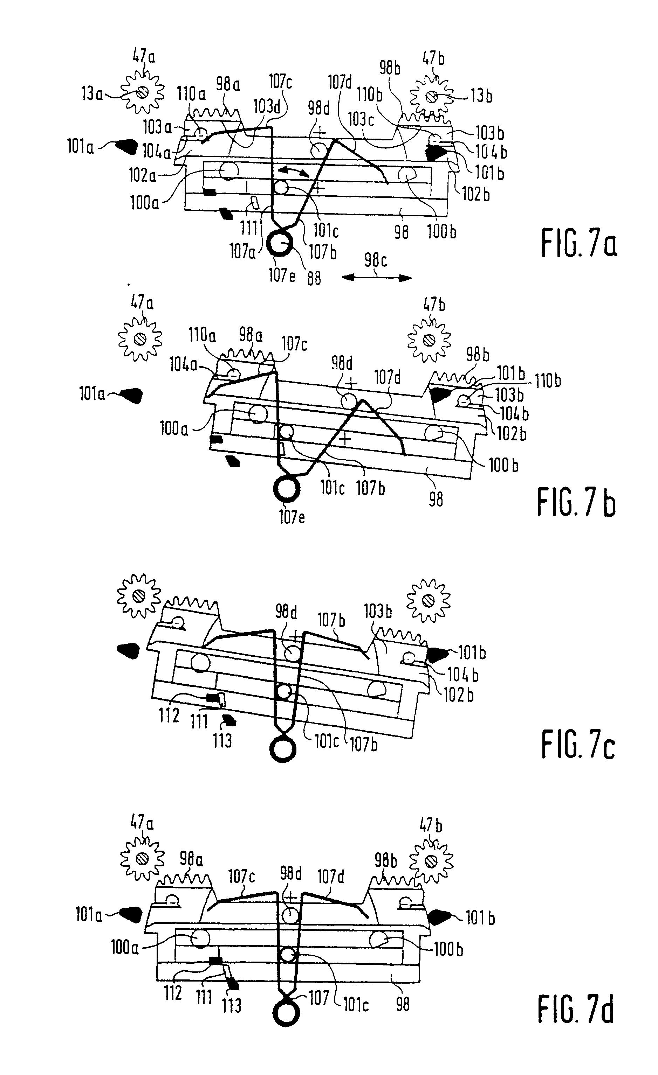

Die Richtungsumkehrvorrichtung 68 weist eine kippbare Transportstange 98 auf mit Zahnstangenabschnitten 98a, 98b. Die Transportstange 98 wird heim Richtungswechsel abgesehen von einem Kippen um einen in Fig. 7a gekrümmt dargestellten Pfeil, in Richtung eines Doppelpfeiles 98c, hin und her geschoben. Die Transportstange 98 trägt in Verschieberichtung 98c beidseitig je einen Mitnehmer 100a, 100b. Es sind zwei ortsfeste, an der Chassisplatte 3 befestigte Leitstifte 101a, 101b vorgesehen. Ein Lagerstift 101c ist Bestandteil eines in Verbindung mit der bevorzugten Anlaufrichtung beschriebenen Stellgliedes 503. In einer Mittelstellung der Transportstange 98, wie sie aus Fig. 1 zu ersehen ist, befinden sich Leitstifte 101a, 101b beiderseits außerhalb einer Leitstiftnut 102a, 102b.

Beim Verschieben der Transportstange 98 fährt eine der Leitstiftnuten 102a, 102b auf den einen oder anderen Leitstift 101a, 101b auf. Dabei kommt der jeweilige Zahnstangenabschnitt 98a. 98b mit dem entsprechenden Schwungrad-Zahnrad 47a oder b in Eingriff. Parallel zu den Leitstiftnuten 102a, 102b erstrecken sich Kippnuten 103a, 103b in die jeweils der in der entsprechenden Leitstiftnut 102a oder b befindliche Leitstift 101a, 101b nach dem Überwinden einer Stützwand 104a oder 104b einfallen kann. Die Transportstange 98 kippt dabei um den chassisfesten Lagerstift 101c. Der Zentral-Schalthebel 43 ist am Schalthebelarm 43c mit einem Vierkantansatz 99 versehen, der mit der Transportstange 98 zusammenwirken kann.

Im weiteren Verlauf der Bewegungen zur Richtungsumkehr drückt der Vierkantansatz 99 gegen die Transportstange 98, wenn die Umkehrplatte 87 den Zentral-Schalthebel 43 mit dem zur Transportstange 98 gelegenen Schalthebelarm 43c entgegen dem Uhrzeigersinn in Richtung auf die Symmetrielinie 48e zieht. Dadurch wird die Transport stange 98 aus der Stellung nach Fig. 1 nach rechts verschoben, die Leitstiftnut 102b fährt auf den Leitstift 101b und wird von diesem eingefangen (Fig. 7a). Der Zahnstangenabschnitt 98b kommt mit dem rechten Schwungradzahnrad 47b in Eingriff; damit zieht das rechte Schwungradzahnrad 47b die Transportstange 98 weiter nach rechts. Bei dieser Bewegung der Transport stange 98 stößt der Mitnehmer 100a gegen eine Kante 87d der Umkehrplatte 87, wodurch diese im Uhrzeigersinn weiter geschwenkt wird. Durch die Kopplung von Umkehrplatte 87 und Zentral-Schalthebel 43 über die im Schlitz 90 geführte Achse 72 schwenkt auch der ZentralSchalthebel 43 um, und zwar entgegen dem Uhrzeigersinn. Die Transportstange 98 fährt solange weiter nach rechts, bis der Leitstift 101b an der Stützwand 104b vorbei in die Kippnut 103b einfallen kann. Dabei kippt die Transportstange 98 und kommt das rechte Schwungradzahnrad 47b mit dem Zahnstangenabschnitt 98b außer Eingriff (Fig. 7b).

Die Umkehrplatte 87 trägt einen Lagerstift 94, in den ein Arm 96a einer Schenkelfeder 95 eingehängt ist. Der andere Arm 96b der Schenkelfeder 95 greift an einem Lagerstift 97 an der Chassisplatte 3 an. Beim Verschwenken im Uhrzeigersinn aus der Stellung von Fig. 1 nach Fig. 4 wird die Schenkelfeder 95 bis zum Totpunkt gespannt. Nach dessen Überschreiten kehrt sich die Kraftrichtung auf die Umkehrplatte 87 um, so daß die Umkehrplatte 87 und damit auch der Zentral-Schalthebel 43 durch die Federkraft getrieben weiterschwenken in die Vorwärts-Spielstellung nach Fig. 4.

Bei diesem Verschwenken der Umkehrplatte 87 von der Stellung nach Fig. 1 bis 3 in die Stellung nach Fig. 4 bis 6 hat diese über die Kupplungsachse 72 den Zentral-Schalthebel 43 mitgenommen und dabei seinen Schalthebelarm 43c mit dem Vierkantansatz 99 über die Mittelstellung hinweg verschwenkt. Dies hat zur Folge, daß der dritte Schalthebel 49 entgegen dem Uhrzeigersinn umgeworfen wird, da sein Stift 61 von der Umwerfkontur 117a bzw. in der anderen Richtung von 117b des Zentralschalthebels 43 mitgenommen wird. Die Feder 66 zieht den dritten Schalthebel 49 nun nicht mehr in Richtung auf den Wickelteller 17b, sondern in Richtung auf den Wickelteller 17a.

Die Transportstange 98 hat nun ihre Aufgabe im Rahmen der Richtungsumkehr vom Reverse- zum Vorwärts-Betrieb erfüllt und muß wieder in ihre neutrale Mittelstellung zurückkehren. Hierzu dient eine Rückstellfeder 107. Diese Rückstellfeder 107 ist haarnadelförmig ausgebildet mit sich überkreuzenden Schenkeln 107a und 107b. Die Windung 107e der Rückstellfeder 107 umschließt die chassisfeste Umkehrachse 88. In Ruhestellung schließen darüber hinaus die Schenkel 107a, 107b zwischen sich den am Stellglied 503 angeordneten Lagerstift 101c und einen Mitnehmer 98d auf der Transportstange 98 ein. Die Schenkel 107a, 107b tragen darüber hinaus jeweils nach außen greifende Ausleger 107c, 107d.

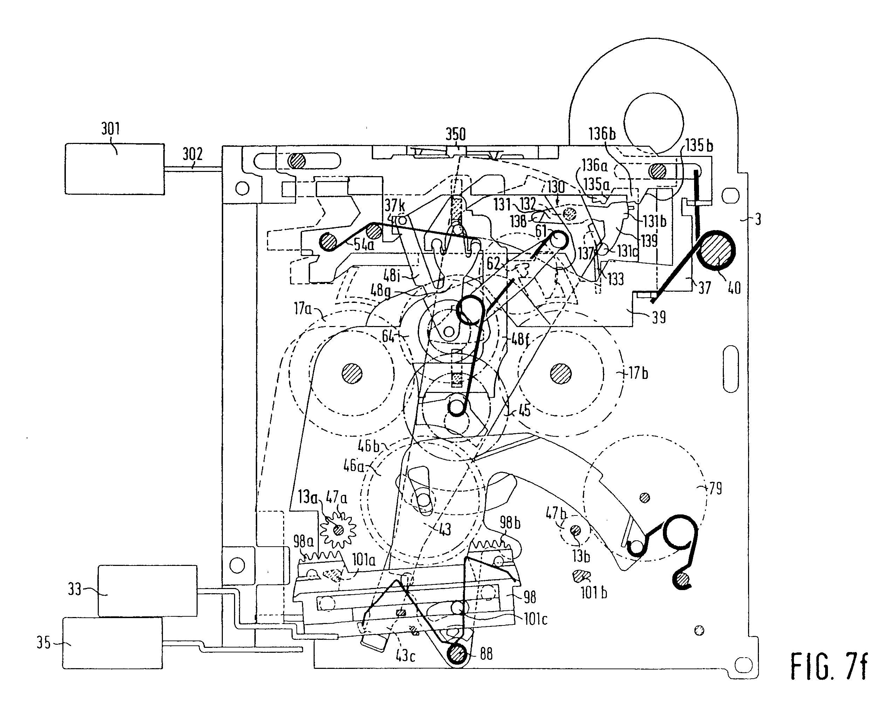

Der Umstellvorgang wird anhand der Fig. 7a bis 7d erläutert. Fig. 7 zeigt abweichend von den Fig. 7a bis 7d das Laufwerk während der Umschaltung von Vorwärtsbetrieb (Wickelteller 17b wird angetrieben) zum Reversebetrieb (Wickelteller 17a wird angetrieben).

Die Transportstange 98 wurde in Fig. 7a bis 7d nach rechts verschoben, und der Zahnstangenabschnitt 98b ist mit der Schwungradzahnung 47b in Eingriff. Der Leitstift 101b hat in der Leitstiftnut 102b die Stützwand 104h erreicht. Der Rückstellfederarm 107b ist durch das Verschieben der Transportstange 98 mittels des Mitnehmers 98d nach rechts mitgenommen und vorgespannt. Der Ausleger 107c wirkt mit Druckstiften 110a derart zusammen, daß der Ausleger 107c bei der Darstellung nach Fig. 7a durch sein Drücken gegen den Druckstift 110a die Transportstange 98 um den Lagerstift 101c im Uhrzeigersinn verschwenkt, bis der Leitstift 101b in der Kippnut 103h gegen eine Kippnutwand 103c stößt. Die Zahnungen 47h und 98b sind damit voneinander getrennt.

Nun kann der Rückstellfederarm 107b, der vom Transportstangenmitnehmer 98d nach rechts verschoben und verspannt wurde, den Mitnehmer 98d wieder nach links schieben, wobei der Leitstift 101b die Kippnut 103b verläßt (Fig. 7c).

Auf der Transportstange 98 ist ein Anschlag 111 vorgesehen, der mit chassisfesten Leitstücken 112, 113 zusammenwirkt. Der Anschlag 111 läuft beim Nach-links-Zurückverschieben der Transportstange 98 auf das Leitstück 112 auf, bevor die Mittelstellung erreicht ist. Durch die dann noch drehend wirkende Kraft des Rückstellfederarmes 107b wird die Transportstange aus ihrer verschwenkten Lage in die nicht verschwenkte zurückgedreht. In dieser gerade ausgerichteten Stellung (Fig. 7d) geht die Wirkung des Anschlages 112 verloren, und die Transportstange verschiebt sich, weiterhin getrieben durch die Rückstellfeder, in die Mittelstellung.

Die Umkehr der Bandzugrichtung bei Bandende aus dem Schnellauf heraus erfolgt im wesentlichen auf dieselbe Weise. Der Unterschied liegt nur in der Einleitung des Umkehrvorganges. Beim Bandende im Spiel-Betrieb löst das stillstehende Abtriebsrad 46b die Umkehr aus, weil es beim Bandstillstand keine rückstellende Kraft auf den Schaltarm 75 ausübt und letztlich der Steuerstift 85 durch Drücken gegen die Anschlagfläche 86 die Umkehrplatte 87 im Uhrzeigersinn schwenkt. Aus dem Schnellauf heraus wird dieser Mechanismus umgangen. Da im Schnellauf der Motorantrieb nicht durch eine Kupplung vom Wickelteller getrennt ist, wird beim Blockieren des Wickels am Bandende ein deutlich höheres Drehmoment auf das Antriebsrad 46a ausgeübt als beim Spiel-Betrieb. Dadurch wird am Bandende bei Stillstand im Schnellspulbetrieb beispielsweise des Wickeltellers 17a das jeweils selbstaustreihend ausgelegte Getriebe 47a, 46a bzw. 47b, 46a gegen die Kraft der Feder 95 auseinander gedrückt. Unter selbstantreibend ist dabei zu verstehen, daß die Verzahnungen des Schwungradzahnrades 47a, 47b und des mit ihm kämmenden Antriebszahnrades 46a vom weiter umlaufenden Schwungradzahnrad 47a, 47b auseinander gedrückt werden, weil das Drehmoment des antreibenden Schwungradzahnrades 47a, 47b größer ist als das entgegengesetzt wirkende Drehmoment des Zahnradschalthebels 43, das von der Umschaltplatte 87 und deren Feder 95 ausgeübt wird. Dieses Lösen ist begleitet von einem leichten Verschwenken des Zentral-Schalthebels 43 entgegen dem Uhrzeigersinn bei Stillstand im Reverse-Betrieb und im Uhrzeigersinn bei Stillstand im Vorwärtsbetrieb. Diese Schwenkbewegung des Schalthebels 43 führt dazu, daß der Vierkantansatz 99 gegen die Transportstange 98 stößt und diese so weit verschiebt, daß der Zahnstangenabschnitt 98b (bei Stillstand im Reversebetrieb) mit dem rechten Schwungradzahnrad 47 in Eingriff kommt. Danach läuft der Umkehrvorgang so ab, wie er bereits zum Umkehren bei Bandende vom Reversebetrieb in den Spiel-Betrieb (Fig. 4 bis 6) beschrieben wurde.

Um am Bandende aus dem Schnellauf zu erreichen, daß das gesamte Schnellaufgetriebe, bestehend aus Kupplungsprimärrad 46a, Zwischenrad 45 und Schnellvorlauf(SVL)-Rad 64 bzw. Schnellrücklauf(SRL)-Rad 65, so lange blockiert bleibt, bis durch das dadurch erfolgte Verschwenken des Zentral-Schalthebels 43 die Transportstange 98 in Eingriff mit den jeweiligen Schwungscheiben 47a/b gebracht ist, ist es notwendig, das jeweils mit dem Wickeltellerrad 17a oder 17b in Eingriff befindliche Schnellaufrad in Eingriff zu halten. Hierzu dienen die Stifte 61 und 62 am dritten Schwenkhebel 49, die beim Schnellauf aus dem Rückwärtsspielbetrieb mit der SRL-Verriegelungskontur 115 bzw. SVL-Verriegelungskontur 39g des Chassis und im Schnellauf aus dem Vorwärtsspielbetrieb mit der SRL-Verriegelungs kontur 37f an der SRL-Tastenstange 37 und mit der SVL-Verriegelungskontur 39f an der SVL-Tastenstange zusammenarbeiten. Die Verriegelung erfolgt dadurch, daß die Verzahnungskräfte des Zwischenrades 45 den schwenkbaren Teil 48g des zweiten Schalthebels 48 am Bandende immer in die Richtung drehen, in welche der dritte Schalthebel 49 zeigt. Dadurch fährt beim Schnellvorlauf im Rückwärts betrieb der Stift 62 unter die SRL-Verriegelungskontur 115 und im Schnellrücklauf im Vorwärtsbetrieb der Stift 61 gegen die SRL-Verriegelungskontur 37f, wodurch ein weiteres Verschwenken des schwenkbaren Teiles 48 g des zweiten Schalthebels 48 verhindert wird und die Verzahnungen in Eingriff bleiben. Wird nach dem In-Eingriff-Gehen der Transportstangen-Zahnabschnitte 98a bzw. 98b durch das dann erfolgende Weiterdrehen des Zentralschalthebels 43 und damit auch des Kupplungsdoppelrades 46 der Zahneingriff zwischen den jeweiligen Schwungscheihen-Zahnrädern 17a/b und dem Kupplungsprimärrad 46a getrennt, dann entfällt das den schwenkbaren Teil des zweiten Schalthebels 48 verdrehende Drehmoment, und die Verriegelung der SL-Räder wird unter Wirkung der rückstellenden Federkraft von der Feder 66 gelöst. Das Umwerfen des dritten Schalthebels 49 auf die jeweils andere Seite im Zuge des umschaltenden Zentralschalthebels 43 kann dann erfolgen.

Der Anschlag 51c am schwenkbaren Teil 48i des Schalthebels 48 dient auch der Vermeidung von Fehlfunktionen. Für den Fall, daß der Bediener des Laufwerkes zu dem Umschaltzeitpunkt gerade die SRL-Taste gedrückt hält, kommt der Anschlag 51c bei gedrückter Taste 33 in einer Haltekontur 37k an der SRL-Tastenstange zu liegen. Dadurch wird erreicht, daß der schwenkbare Teil 48g des zweiten Schalthebels 48, wenn der dritte Schalthebel 49 beim Umschalten aus seiner SRL-Verriegelung, bestehend aus dem Stift 62 und der SRL-Fangkontur 39g (Rev-Betrieb) bzw. aus dem Stift 61 und der SRL-Verriegelungskontur 37f (NOR-Betrieb), herausgehoben wird, unter Wirkung der Kraft von Feder 66 nur so weit verschwenken kann, daß das SVL-Rad mit keinem der Wickelräderteller 17a, 17b in Eingriff geht.

Während des Umschwenkens des Zentral-Schalthebels 43 wird zusätzlich die Verriegelung der Schnellauf-Stangen 37, 39 dadurch gelöst, daß ein auf dem Zentral-Schalthebel 43 befindliches Betätigungsstück 137 gegen einen Lösestift 131c eines Klinkenhebels 131 stößt und somit den Klinkenhebel 131 im Uhrzeigersinn verdreht.

## Vorwärts-Spiel-Betrieb

Fig. 4a und b zeigen die gegenseitige Lage der Teile des Spielmechanismus im Vorwärts-Spiel-Betrieb. Beide Schnellspultasten sind ausgerückt. Das Schwungradzahnrad 47b treibt das Antriebszahnrad 46a, das Zwischenrad 45, das Abtriebszahnrad 46 und den Wickelteller 17b an. Der dritte Schalthebel 49 ist nach links umgelegt, und der Schalthebel 43 ist entgegen dem Uhrzeigersinn verschwenkt.

## Schnellvorlauf im Vorwärts-Spiel-Betrieb

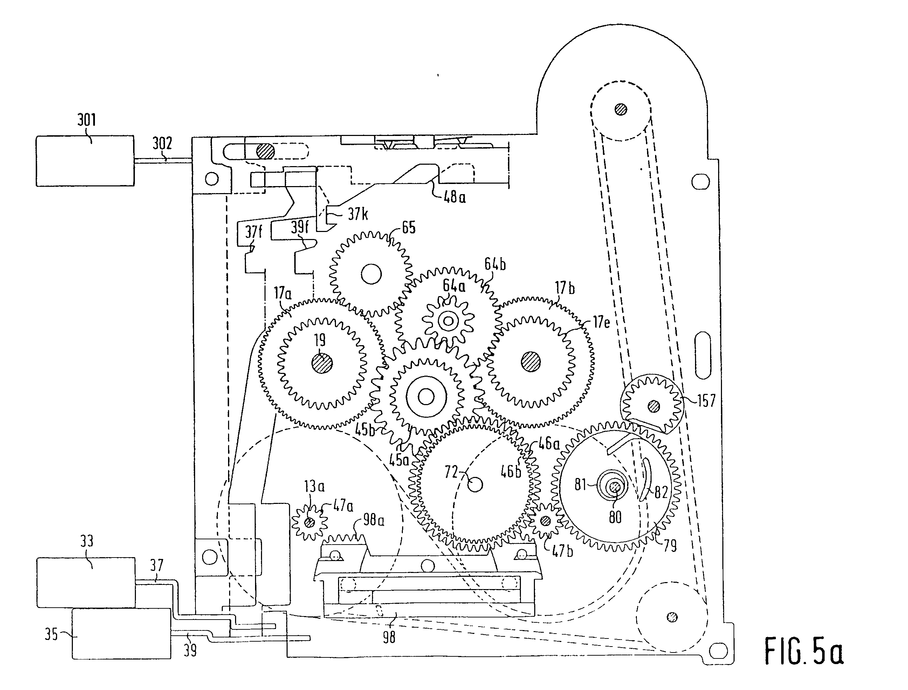

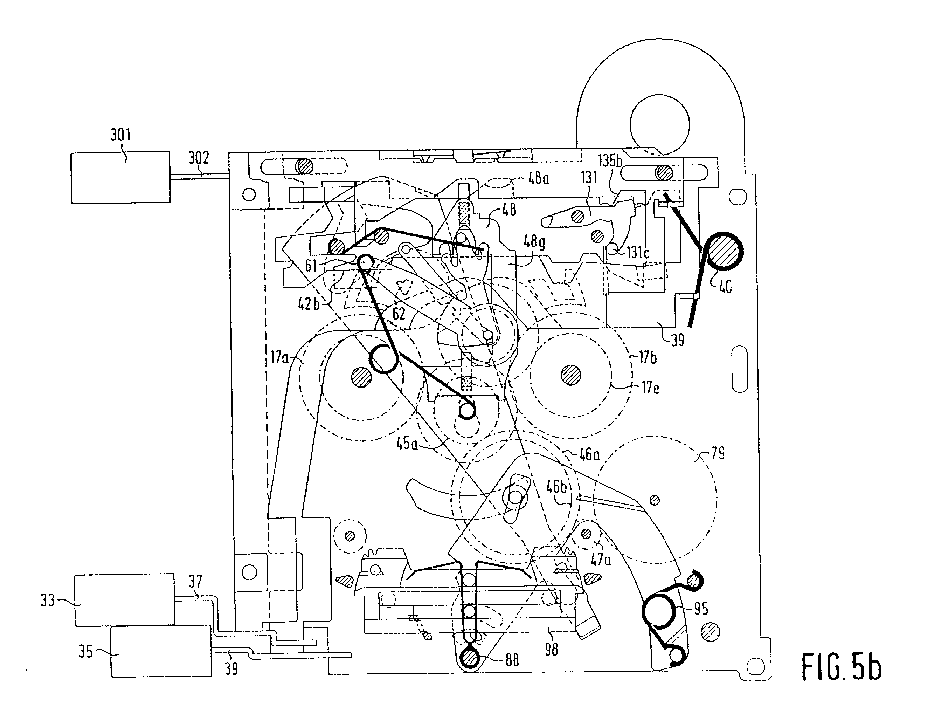

Fig. 5a und b zeigen die Stellung des Laufwerkes bei dem schnellen Vorlauf aus dem Vorwärts-Spiel-Betrieb. Die Funktionen entsprechen denen der Fig. 2, allerdings leitet der Zentral-Schalthebel 43 den Antrieb vom rechten Schwungrad-Zahnrad 47b ab. Wird die Taste 35 für schnellen Vorlauf (SVL) gedrückt, dann drückt die Verstellkontur 48a der Tastenstange 39 den zweiten Schalthebel 48 und den Stellköpfen 54c, 54d nach innen. Die Stellköpfe 54c, 54d stoßen dabei gegen die Kanten 55a, 55b des Zentral-Schalthebels 43 in der Nähe der Zentralachse 44. Gleichzeitig schwenkt der schwenkbare Teil 48g des Schalthebels 48 mit dem Führungsstift 53a in der dreieckförmigen Öffnung 53 des Chassis nach rechts. Beim Einschieben der Tastenstange 39 liegt der Stift 61 auf der Leitkontur 42b, wodurch die Verzahnung des Schnell-Rücklaufzahnrades 65 nicht mit dem Wikkelteller 17a in Eingriff kommt. Der Führungsstift 53a des schwenkbaren Teiles 48g des zweiten Schalthebels 48 ist beim Eindrücken bis zum Anschlagen entgegen dem Uhrzeigersinn um den Achskopf 52h gegen das innen rechts gelegene Ende des fächerförmigen Schlitzes 53 verschwenkt. Der Zentral-Schalthebel 43 wurde damit ein wenig im Uhrzeigersinn verschwenkt. Das Ahtriebszahnrad 46b des Kupplungs-Doppelrades 46a, b wurde vom rechten Wickelteller 17b weggezogen und statt dessen der große Zahnkranz 64b des Zahnrades 64 auf den Zahnkranz 17e des rechten Wickeltellers 17b geschaltet, wobei die Kraftübertragung vom Kupplungsdoppelrad 45a, b auf den kleinen Zahnkranz 64a des Zahnradsatzes 64a, b und über den großen Zahnkranz 64b auf den Zahnkranz 17e des Wickeltellers 17b erfolgt. Der schnelle Vorlauf läßt sich wieder lösen durch das Eindrücken der Tasten 33 für schnellen Rücklauf. Dabei drückt die an der Tastenstange 37 vorgesehene Lösekontur 135b die Klinke 131 in ihre Mittelstellung zurück.

## Schnellrücklauf im Vorwärts-Spiel-Betrieb

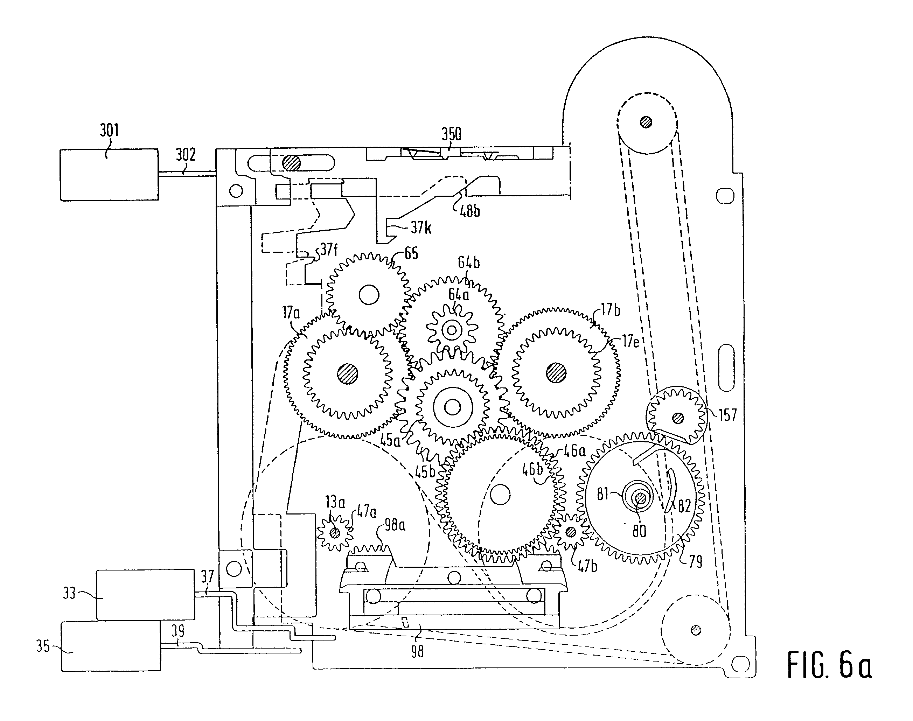

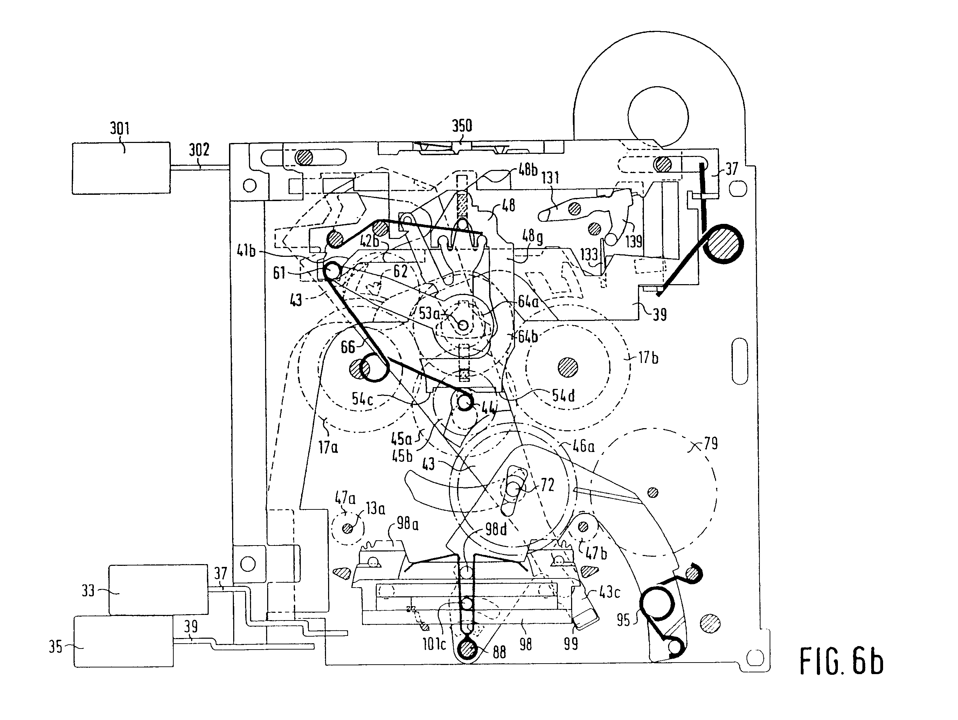

In Fig. 6a sind die Eingriffsverhältnisse für den schnellen Rücklauf im Vorwärts-Spiel-Betrieb dargestellt. Der schnelle Rücklauf läßt sich erreichen durch das Eindrücken der Taste 33 mit der zugehörigen Tastenstange 37. Beim Drücken der Taste 33 drückt die Verstellkontur 48b den zweiten Schalthebel 48 und seine Stellköpfe 54c, 54d nach innen und läuft der Stift 61 längs der Leitkontur 42b ab. Eine Schwenkbewegung des Teiles 48g des zweiten Schalthebels 48 wird verhindert, da der schwenkbare Teil 48g des zweiten Schalthebels 48 mittels des Stiftes 61 an der Leitkontur 41b der Tastenstange 39 gehalten wird. Der schwenkbare Teil 48g des zweiten Schalthebels 48 nimmt den dritten Schalthebel 49 bei seiner Eindrückhewegung mit. Die Stellköpfe 54c, 54d drücken gegen die Kanten 55a, 55b des Schalthebels 43. Der Zentral-Schalthebel 43 schwenkt im Uhrzeigersinn und wird gleichzeitig nach innen verschoben im Schlitz 44a. Das Abtriebsrad 46b des Kupplungsdoppelrades 46a, b hebt sich damit vom rechten Wickelteller 17b ab. Bei dem nun eingeschalteten schnellen Rücklauf (SRL) treibt das Schwungradzahnrad 47b über das Antriebszahnrad 46a des Kupplungsdoppelrades 46a, b, das Zwischenrad 45, den kleinen Schnellauf-Zahnkranz 64a des Schnellauf-Zahnradsatzes 64a, b den großen Schnellauf-Zahnkranz 64b des Schnellauf-Zahnradsatzes 64a, b und das Schnell-Rücklaufzahnrad 65 den links gelegenen Wickelteller 17a schnell an. Der schnelle Rücklauf wird beendet durch das Eindrücken der Taste 35 für schnellen Vorlauf. Die Vorspann- und Lösekontur 135a der anderen Tastenstange 39 drückt die Klinke 131 in ihre Mittelstellung zurück.

## Schnellspultastenarretierung

Die Tastenstangen 37, 39 sind mit einem Arretiermechanismus 130 versehen, der die jeweils eingedrückte Tastenstange 37, 39 in der eingedrückten Stellung festhält, bis eine Lösung der eingedrückten Stellung durch Drücken der jeweils anderen Tastenstange 37, 39 erfolgt. Das Ausrücken nach dem Lösen wird von der Druckfeder 40 bewirkt, die die Tastenstangen 37, 39 immer in Ausrückrichtung belasten. Der Arretiermechanismus 130 besteht aus dem stabförmigen Klinkenhebel 131, der um eine in der Chassisplatte 3 gelagerte Achse 132 verschwenkbar ist. An einer Seite des Klinkenhebels 131 ist ein Arm 139 vorgesehen, gegen den eine Feder 133 drückt. Die jeweils eingedrückte Tastenstange 37, 39 verschwenkt den Klinkenhebel 131 über die jeweilige Vorspann- und Lösekontur 135a/b 50 entgegen der Kraft von Feder 133, daß die gedrückte Taste an der Klinke vorbei fahren kann, bis das hintere Ende 131b des Klinkenhebels 131 hinter einen von zwei Arretiervorsprüngen 136a, b fallen und die gerade eingedrückte Taste somit in der eingeschobenen Stellung blockieren kann. Derartige Arretierstellungen sind in den Fig; 2, 3, 5 und 6 für die beiden Tastenstangen 37, 39 dargestellt.

Das Lösen der Arretierung nach Wunsch des Gerätebenutzers geschieht durch Drücken der gerade nicht arretierten Taste, und zwar derart, daß die jeweilige Kontur 135a, b der lösenden Taste gegen die Lösekontur 131d des Klinkenhebels 131 drückt, wodurch der Klinkenhebel 131 verschwenkt und die Rastung freigegeben wird.

Das Lösen der Arretierung beim Bandzugrichtungs-Umschalten erfolgt im Schnellauf bei eingedrückter Tastenstangen 37, 39 mittels des Zentral-Schalthebels 43, der ein Betätigungsstück 137 aufweist. Das Betätigungsstück 137 arbeitet mit dem Lösestift 131c zusammen, der auf dem Klinkenhebel 131 angeordnet ist. Fährt der Zentral-Schalthebel 43 in der Darstellung nach Fig. 7f über den Klinkenhebel 131 und mit dem Betätigungsstück 137 am Lösestift 131c vorbei, dann dreht die Lösekontur 137 den Klinkenhebel 131 in die Mittelstellung nach Fig. 7 und die Arretierung der gerade eingeschobenen Tastenstange wird aufgehoben, so daß sie aus fahren kann. Das Betätigungsstück 137 hat in der Darstellung nach Fig. 7f den Lösestift 131c und damit den Klinkenhebel 131 gerade im Uhrzeigersinn verschwenkt.

## Kopfplattenverstellung

Fig. 8a, b und c zeigen einen Mechanismus für die Kopfplattenverstellung im Auswerf-(Eject)-, Spiel- und Schnellspulbetrieb. Die Kopfplatte 21, die den Tonkopf 23 trägt, ist mittels eines Schlepphebels 150 verstellbar gelagert in Lagerführungen 151, die eine parallele Verschiebung der Kopfplatte 21 zur Bandführung sichern. Die Lagerführungen 151 führen die Kopfplatte 21 in Vorschubrichtung 152 gegenüber dem abzutastenden Magnetband 153 (Fig. 8b), einer Magnetbandkassette 200. Eine Kopfplattenfeder 21f ist bestrebt, die Kopfplatte 21 aus der Spielstellung, in der der Tonkopf 23 am Magnetband 153 anliegt, über die Schnellspul- bzw. Stand-by- in die Eject-Stellung zu ziehen.

Die Kopfplatte 21 weist an ihren Längsenden 21b, 21c Plattenschenkel 21d, 21e auf. Der Plattenschenkel 21d trägt einen Nocken 155, der mit einem Fanghebel 162 zusammenwirkt. Der Plattenschenkel 21e trägt den Schlepphebel 150.

Das Schaltrad 79 ist mit einem Schlepprad 157 kuppelbar, das im Chassis gelagert ist. Das Schlepprad 157 weist eine Steuerkontur 157a auf, die mit dem Schiepphebel 150 zusammenwirkt. Weiterhin hat das Schlepprad 157 eine Segmentverzahnung 157b und eine ringförmige Sperrwand 157c am äußeren Umfang 157d. Das Schlepprad hat eine ebene Fläche 157e.

Befindet sich die Kopfplatte 21 in der Eject-Stellung bei stillstehendem Antriebsmotor 9 (Fig. 8a), dann wird der Schlepphebel 150 aufgrund der Kraft einer auf ihn wirkenden Schlepphebelfeder 154 so entgegen dem Uhrzeigersinn geschwenkt, daß er in Richtung auf das Schlepprad 157 verschwenkt und sich an die Sperrwand 157d anlegt. Die Schlepphebelfeder 154 ist dazu als Schenkelfeder ausgebildet, deren Schenkel 154a, 154b sowohl mit Chassisnocken 160a, 160b, die in Kopfplattenverschieberichtung hintereinander seitlich des Schlepphebels 150 liegen, als auch mit Schlepphebelnocken 161a, 161b am Schlepphebel 150 zusammenwirken. Die Federwindungen 154c der Schlepphebelfeder 154 umschließen einen domartigen Lagerring 150d des Schlepphebels 150. Durch diesen Lagerring 150d greift eine an der Kopfplatte 21 vorgesehene Lagerachse 150a des Schlepphebels 150. In der zurückgezogenen Auswerf(Eject)-Stellung liegen der Schenkel 154b also an dem Chassisnocken 160b und der Schenkel 154a an dem Schlepphebelnocken 161a an, so daß der Schlepphebel 150 in Richtung auf das Schlepprad 157 belastet ist.

Wird das Laufwerk elektrisch gestartet, d. h. laufen die Tonwellen 13a, 13b an, dann soll das Schlepprad 157 die Kopfplatte 21 in die Spielstellung ziehen. Hierzu muß eine Kupplung zwischen dem Schaltrad 79 und dem Schlepprad 157 herbeigeführt werden, die nach dem Überführen der Kopfplatte 21 in die Spielstellung wieder aufgehoben werden muß. Für diese Kuppel- und Entkuppelvorgänge ist eine Stellfeder 166 mit einem ersten Schenkel 166a und einem zweiten Schenkel 166b vorgesehen. Die Windung 166c der Stellfeder 166 umschließt einen Bolzen 167, der in einer L-förmigen Nut 168 des Chassis geführt ist und von der Kopfplatte verstellbar ist mittels zweier am Plattenschenkel 21e angeordneter Verstellkanten 21g und 21h. Ein Schenkel 168a der L-förmigen Nut 168 dient dem Bolzen 167 als Verriegelung.

Der erste Schenkel 166a der Stellfeder 166 stützt sich am Chassis ab. Der zweite Schenkel 166b liegt an einer an der Zylinderwand des Schleppprades angeordneten ebenen Fläche 157e. Damit ist das Schlepprad 157 stets bestrebt, sich so zu verdrehen, daß seine ebene Fläche 157e parallel zum zweiten Schenkel 166b der Stellfeder 166 ausgerichtet ist. Der Bolzen 167 ist in der L-förmigen Nut 168 so verschoben, daß er an der Verstellkante 21h am Kopfplattenschenkel 21e anliegt. Da die Windung der Stellfeder 166 an dem Bolzen 167 befestigt ist, nimmt in dieser Lage der zweite Schenkel 166b eine Richtung ein, in der er das Schlepprad 79 so weit verdreht wird, bis die Verzahnung mit dem Steuerrad in Eingriff kommt.

Wird eine Kassette eingeschoben, so läuft der Motor 9 an, und der aufwickelnde Wickel der Kassette 200 sowie die Tonwellen 7a, 7b als auch das Schlepprad 157 beginnen zu drehen. Da der Schlepphebel 150 an der Sperrwand 157c des Schleppprades 157 anliegt, wird verhindert, daß der Schlepphebel 150 sofort in den Wirkbereich des Schleppradnockens 157a kommen kann. Das Schlepprad beginnt entgegen dem Uhrzeigersinn zu drehen, wobei der Schlepphebel 150 von der weglaufenden ringförmigen Sperrwand 157c abgleitet. Er fällt dabei aber auf die Zylinderwand des Schleppradnockens 157a und kann daher noch nicht mitgeschleppt werden. Das Schlepprad 157 dreht weiter, und der Schlepphebel 150 gleitet von der Zylinderwand des Schleppradnockens 157a ab und kann erst jetzt in den Wirkbereich des Schleppradnockens 157a fallen. Nach ca. einer halben Umdrehung des Schleppprades 157 beginnt der Kopfplattentransport in die Spielstellung. Während der gesamten, oben beschriebenen Drehung des Schleppprades 157 dreht der Wickel der Kassette, wodurch eine evtl. vorhandene Bandschlaufe entfernt wird, bevor die Kopfplatte 21 bewegt wird.

Das Schlepprad 157 zieht mittels des Schleppradnockens 157a einen Nocken 150b des Schlepphebels 150 mit und verschiebt die kopfplatte 21 gegen die Wirkung der Kopfplattenfeder 21f in Vorschubrichtung in die Spielstellung. In der Spielstellung fällt der Nocken 155 des Plattenschenkels 21d in eine Play-Mulde 162a eines Fanghebels 162 ein, der auf der Ejectstange 302 schwenkbar gelagert und von einer Fanghebelfeder 163 im Uhrzeigersinn belastet ist. Die Play-Mulde 162a des Fanghebels wirkt selbstverriegelnd. Die Kopfplatte 21 ist somit in der Spiel-Stellung festgehalten. Der Chassisnocken 160a drückt gegen den Schenkel 154a der Schenkelfeder 154 und verschwenkt den Schlepphebel 150 aus dem Wirkbereich des Schleppprades 157. Wird eine Rückkehr der Kopfplatte 21 aus der Spiel-Stellung in die Eject-Stellung gewünscht, dann fährt der Fanghebel 162 mit der eingeschobenen Ejectstange in Einschubrichtung weg und gibt die Kopfplatte frei, wodurch die Kopfplattenfeder 21f die Kopfplatte in die Eject-Stellung zurückziehen kann. Wird jedoch keine Rückkehr in die Eject-Stellung gewünscht, sondern eine Schnellspulstellung, die einer Stand-by-Stellung entspricht, in der die Kopfplatte 21 nur teilweise zurückgezogen ist, dann wird der Fanghebel 162 nach einem kurzen Schwenken entgegen dem Uhrzeigersinn in der Schnellspulstellung blockiert. Der Nocken 155 fällt in eine Schnellspulmulde 162b ein (Fig. 8b). Das Verschwenken entgegen dem Uhrzeigersinn bewirkt beim Übergang zum Schnellspulen ein Ansatz 401a, b der jeweils eingedrückten Schnellspulstange 37, 39 dadurch, daß ein an dem Fanghebel 162 befindlicher Begrenzungszapfen von diesem weggedrückt wird. Die Begrenzung der Schwenkbewegung übernimmt eine Kulissenkante 37e, 39e der eingedrückten Schnellspulstange 37, 39, indem der Schwenkweg des Begrenzungszapfens 162d begrenzt wird.

Im Verlaufe der Stand-by-Funktion übernehmen beide eingedrückte Schnellspulstangen 37, 39 das Verschieben und das Blockieren der Kopfplatte 21 in der Schnellspulstellung.

Fig. 8c zeigt diese Schnellspulstellung der Kopfplatte 21, wobei der Schlepphebel 150 unter bleibendem Druck des Chassisnocken 160a auf die Schenkelfeder 154 ausgeschwenkt bleibt. Aus der Stellung nach Fig. 8c kehrt die Kopfplatte immer, ganz gleich ob Auswerfen (Eject) oder erneutes Aufstarten in den Spielbetrieb gewünscht wird, zunächst in die Eject-Stellung zurück, indem der Fanghebel 162 den Nocken 155 freigibt. Infolge der Rückkehr in die Eject-Stellung schwenkt der Schlepphebel 150 entgegen dem Uhrzeigersinn in den Wirkbereich des Schlepprades 157. Wird hei der Rückkehr in die Eject-Stellung der Antriebsmotor der Tonwellen 13a, 13b abgeschaltet, dann verbleibt die Kopfplatte 21 in der Eject-Stellung. Laufen die Tonwellen 13a, 13b jedoch bei eingeschaltetem Motor 9 weiter um, dann zieht der eingeschwenkte Schlepphebel 150 die Kopfplatte 21 wieder in die Spiel-Stellung vor, und der Fanghebel 162 verrastet die Kopfplatte 21 mit seiner Play-Mulde 162a in der Spiel-Stellung.

Andruckrollenverstellung

Die Fig. 8a bis c zeigen außer der Kopfplattenverstellung auch die Verstellvorrichtung 201 für die Andruckrollen 202a, und 202b, die zum Bandtransport wahlweise an die Tonwellen 13a oder 13b angedrückt werden. Das Laufwerksgetriebe befindet sich in den Fig. 8a bis 8c in der Vorwärts-Spielrichtung (erkennbar an der gestrichelt dargestellten Position der Umkehrplatte 87). Fig. 9a und 9b zeigen die Andruckrollenverstellung, wobei sich das Laufwerksgetriebe aber in der Rückwärts-(Reverse)-Spielrichtung befindet. Die Andruckrollen 202a und 202b sind in Schlitzen 203a, 203b eines Andruckrollenbügels 203 mit ihren Wellen 204 gelagert. Ein Andruckfederbügel 205 drückt die Wellen 204 mit den Andruckrollen 202a und 202b in Richtung auf die Tonwellen 13a, 13b. Der Andruckrollenfederbügel 205 ist am Andruckrollenbügel 203 zwischen Klemmstücken 203c, 203d eingeklemmt.

Um die eine oder andere Andruckrolle 202a, b an die zugeordnete Tonwelle 13a, 13b anzulegen, wird der Andruckrollenbügel 203 verschwenkt oder verkippt. Die Verschwenkung oder Verkippung des Andruckrollenbügels 203 wird anhand der vergrößerten Darstellung nach Fig. 9b erläutert. In der Kopfplatte 21 ist ein Ausschnitt 206 vorgesehen, der in Fig. 9b strichpunktiert dargestellt ist. Um die chassisfeste Umkehrachse 88 ist die Umkehrplatte 87 drehbar gelagert. Diese Umkehrplatte 87 trägt einen Formnocken 207, der in den Ausschnitt 206 der Kopfplatte 206 hinein greift. Der Andruckrollenbügel 203 trägt Konturstücke 208a, b, die ebenfalls mit dem Formnocken 207 zusammenwirken. Der Andruckrollenbügel 203 ist um die Kopfplatte 21 herum verstellbar um eine fiktive Lagerstelle 209. Diese Lagerstelle bildet den Mittelpunkt für die kreisbogenförmigen Konturen 206a und 206b.

Aufgrund dieser Anordnung ist der Andruckrollenbügel 203 in Richtung eines Doppelpfeiles 210 verschwenkbar. Die Verschwenklage wird bestimmt von der Umkehrplatte 87. In Fig. 9a ist die Kopfplatte 21 in die Spielstellung vorgefahren und befindet sich die Umkehrplatte 87 in der Rückwärts-Spielrichtung. Das bedeutet, daß die Andruckrolle 202a an die Tonwelle 13a angelegt ist. Dieses Anlegen ist dadurch zustande gekommen, daß der Formnocken 207 gegen eine Kante 211a des Konturstückes 208a gestoßen ist. Der Formnocken 207 hat dabei den Andruckrollenbügel 203 im Uhrzeigersinn um die Andruckbügel-Lagerstelle 209 verschwenkt. Die Stellungen nach Fig. 9a und 9b entsprechen einander. Fig. 9b ist nur eine nochmals vergrößerte Abbildung, die der besseren Übersicht dient.

Die Fig. 8a zeigt die Kopfplatte 21 in der Eject-Stellung und die Umkehrplatte 87 in der Vorwärts-Spiel-Richtung. In der Eject-Stellung befindet sich der Formnocken 207 dabei in einem Bereich 212 des Kopfplatten-Ausschnittes 206. Der Andruckrollenbügel 203 ist durch die Formgebung im Bereich 212 parallel zur Kopfplatte 21 ausgerichtet. Beide Andruckrollen 202a, b sind von den Tonwellen 13a, b zurückgezogen.

In Fig. 8b ist die Kopfplatte 21 im Vorwärts-Spiel-Betrieb in die Spielstellung gefahren und dort verrastet mittels des Fanghebels 162. Die Umkehrplatte 87 befindet sich dementsprechend in der Vorwärts-Spiel-Stellung. Der Andruckrollenbügel 203 drückt die Andruckrolle 202b über den Andruckfederbügel 205 gegen die Tonwelle 13h. Der Formnocken 207 befindet sich vor der Stellkante 211b des Konturstückes 208b und drückt entgegen dem Uhrzeigersinn gegen den Andruckrollenbügel 203. Die Andruckrolle 202b liegt an der Tonwelle 13b an.

Bei der Darstellung nach Fig. 8c, bei der sich die Kopfplatte 21 in der Schnellspulstellung befindet, liegt der Formnocken 207 nicht an den Kanten 211a oder 211b der Konturen 208 an, weil die Kopfplatte zurückgefallen ist. Die Andruckrolle 202a, b, die eben noch an der ihr zugeordneten Tonwelle anlag, wird dadurch nicht mehr gegen die Tonwelle gedrückt.

## Lade- und Ejectmechanismus

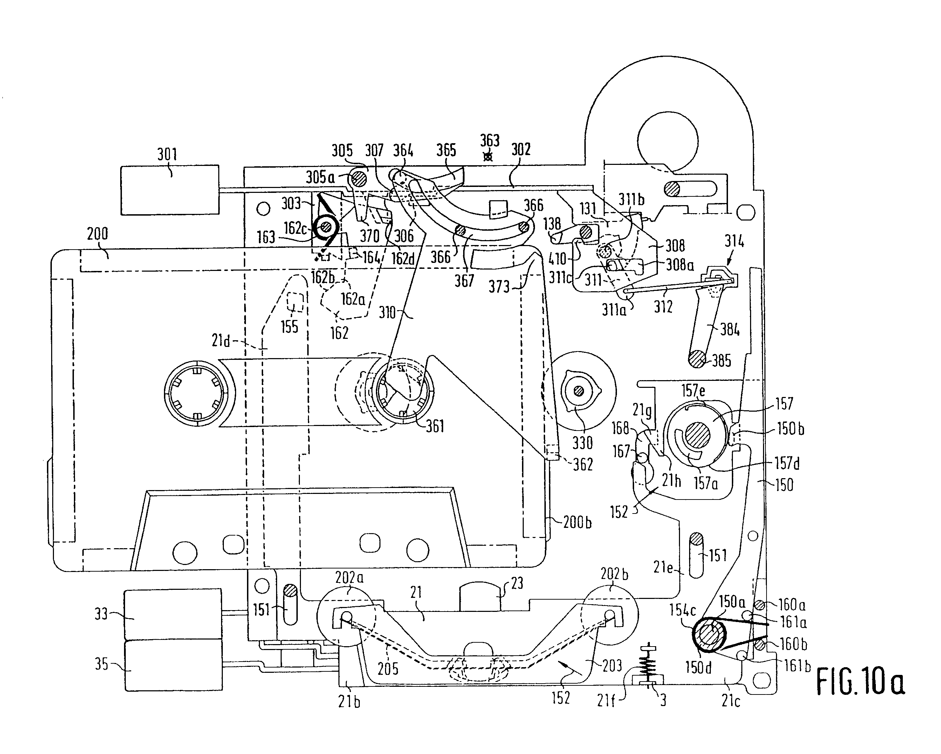

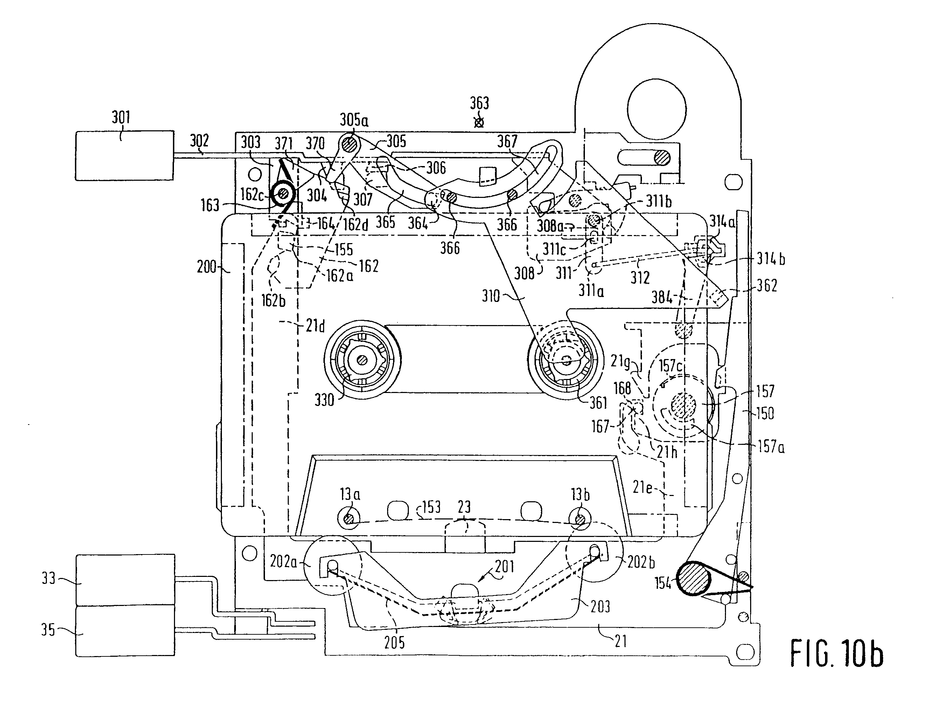

Zum Laufwerk gehört eine in den Fig. 10a und 10b dargestellte Eject-Taste 301 mit einer Eject-Stange 302. Die Eject-Stange 302 trägt Funktionslaschen, denen jeweils spezielle Aufgaben zugeordnet sind. Eine Fanghebellasche 303 trägt den Fanghebel 162. Eine Kulissenlasche 304 wirkt mit einem Riegelnocken 307 eines im Chassis im Drehpunkt 305a gelagerten Kulissenhebels 305 zusammen. Eine Riegellasche 306 wirkt mit dem Riegelnocken 307 des Kulissenhebels 305 zusammen. Eine Mehrfunktionslasche 308 kann die Schnellspultasten lösen und die Umkehr der Bandzugrichtung einleiten. Die Fig. 10a und 10b zeigen als weiteres Bauteil des Laufwerkes einen Kassettenhebel 310 zum Einziehen und Auswerfen der Magnetbandkassette 200.

Der Kassettenhebel 310 ist um einen virtuellen Drehpunkt 363 verschwenkbar. Seine tatsächliche Drehlagerung erfolgt auf zwei am Chassis ortsfest angeordneten Führungsstiften 366, die durch eine kreisbogenförmige Nut 367 des Kassettenhebels 310 hindurchgreifen. Die Krümmung der Nut 367 entspricht der Krümmung eines Kreises um den virtuellen Drehpunkt 363. Ist der virtuelle Drehpunkt weit genug entfernt, wird die Krümmung der Nut 367 relativ flach. Die tatsächliche Längenausdehnung des Kassettenhebels 310 wird dadurch verkürzt. Der Kassettenhebel 310 trägt eine Nase 362, gegen die eine beim Einschieben einer Kassette 200 vorn liegende Kassettenvorderwand 200c stoßen kann. Diese Vorderwand 200c dient allerdings auch beim Ausschieben der Kassette 200 zu deren Ausschieben.

Einstückig mit dem Kassettenhebel 310 ist ein Kassettenmitnehmer 368 gebildet, der so ausgelegt ist, daß er in das Loch 361 eines Wickelkernes einfallen kann. Seine Bewegungsbahn um den virtuellen Drehpunkt 363 nähert sich einer Geraden an. Der Kassettenmitnehmer 368 muß elastisch genug sein, um auf eine Kassettenseitenwand 200a auflaufen und danach in das Loch 369 des Wickelkernes 361 einfallen zu können. Diese Elastizität birgt die Gefahr, daß der Kassettenmitnehmer 368 unbeabsichtigt aus dem Loch 369 herausspringt. Um dies zu verhindern, ist eine nicht dargestellte Abstützung vorgesehen. Diese hält den Mitnehmer 368 nieder während der Wegstrecke, auf der der in das Loch 369 eingefallene Mitnehmer 368 in diesem verbleiben muß.

Der Kassettenhebel 310 weist eine Auswerfhebelkante 373 auf, die mit einem Lösestift 138 der Arretiervorrichtung 130 zusammenwirkt. Die Auswerfhebelkante 373 löst beim Wegstoßen des Lösestiftes 138 das Aufheben der Schnellspulstangenarretierung auf, so daß die Schnellspulstangen 37, 39 und über einen Mitnehmer gekoppelt auch die Ejectstange 302 ausfahren können.

Das Drehen des Kassettenhebels 310 bewirkt ein Kulissenhebel 305, der um einen ortsfesten Drehpunkt schwenken kann. Der Kulissenhebel 305 ist mit einer Kulissenhebelnut 365 versehen, in die ein Schwenkstift 364 des Kassettenhebels 310 eingreift. Der Kulissenhebel 305 trägt noch einen Riegelnocken 307, der mit einer Riegellasche 306 und einer Kulissenlasche 304 der Ejectstange 302 zusammenwirkt, und zwar je nachdem, in welcher Richtung die Ejectstange 302 verschoben werden kann. Die Funktionsweise dieses Mechanismus wird in den Abschnitten Einzugs- und Auswerfvorgang beschrieben.

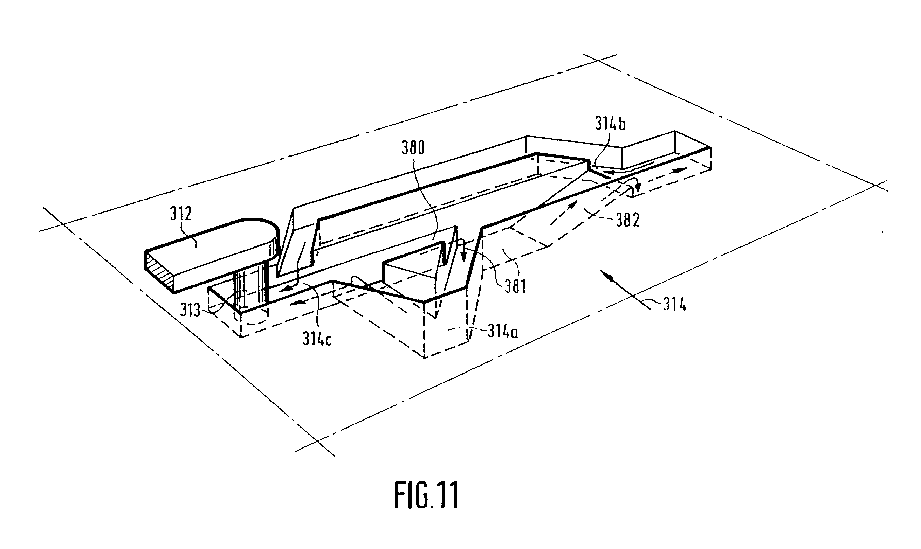

Im Chassis ist ein einarmiger Hebel 311 im Drehpunkt 311b gelagert; er wird über einen an ihm vorgesehen Stift 311c, der in einer Kontur 308a in der Mehrfunktionslasche 308 geführt ist, um seinen Drehpunkt 311b verdreht. Das freie Ende 311a des Hebels 311 führt gelenkig eine Umkehrkralle 312, die mit einem Stift 313 eine am Chassis vorgesehene Mehrbahnführung 314 durchläuft. Diese Mehrbahnführung 314 ist in Fig. 11 vergrößert dargestellt; sie besteht aus einer Einlaufbahn 314c und zwei davon gegenläufig abzweigenden ersten und zweiten Rück-Führungsbahnen 314a, 314b. Die Mehrbahnführung und ihre Funktionsweise sind im Abschnitt Manuelles Reversieren eingehend beschrieben.

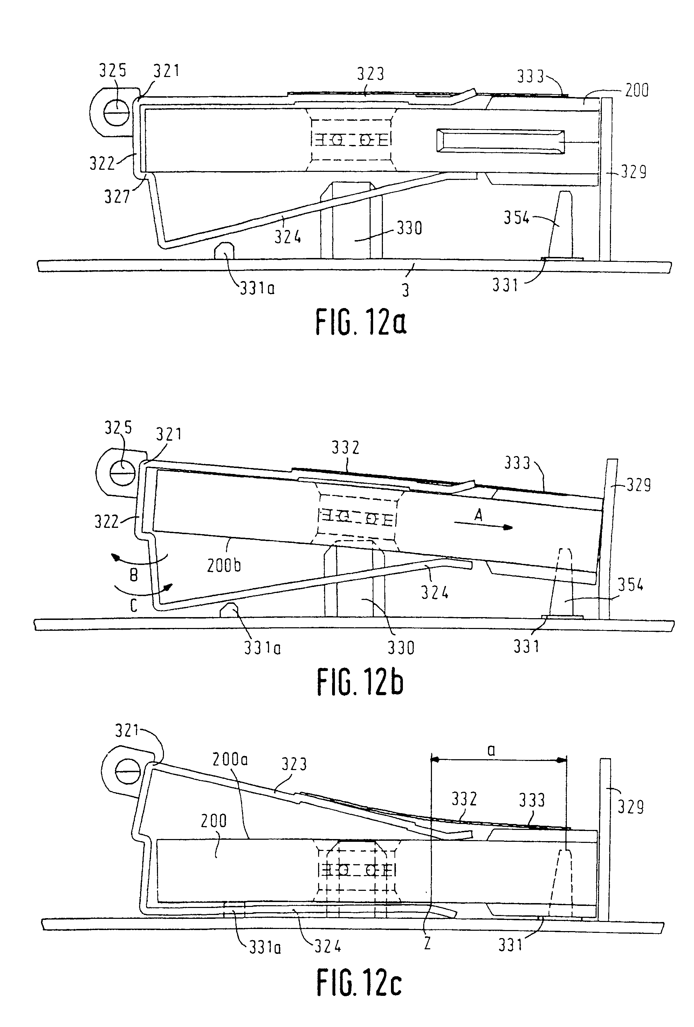

Fig. 12a bis c zeigen von dem Lademechanismus des Laufwerkes insbesondere den zu ihm gehörigen Kassettenschacht 321. Dieser besteht aus einem Blechformteil 321 mit einer Schachtseitenwand 322 und zwei Schenkelplatten 323 und 324. Der Kassettenschacht 321 ist um eine Drehachse 325 drehbar gelagert. Die Schenkelplatten 323, 324 schließen einen Winkel kleiner als 1800 miteinander ein. In der Ladestellung steht die obere Schenkelplatte 323 etwa horizontal. Eine Magnetbandkassette 200 kann damit horizontal in den Kassettenschacht 321 eingeschoben werden (Fig. 12a). Die untere Schenkelplatte 324 ist in dieser Ladestellung nach oben geschwenkt. Die Magnetbandkassette 200 liegt in einem Sattelfalz 327 der Schachtseitenwand 322. Beim Absenken des Kassettenschachtes 321 (Drehen um seine Drehachse 325) wird der Sattelfalz 327 in Richtung eines Pfeiles B zur Seite weggeschwenkt. Dabei wird die Kassette von den Fangstiften 354 gehalten, bzw. durch deren Gestaltung bei der Abwärtsbewegung der Kassette noch zusätzlich vom Sattelfalz 327 in Richtung eines Pfeiles A weggezogen (Fig. 12b).

Durch diese Relativbewegung verliert die Kassette 200 nach einem gewissen Absenken am Sattelfalz 327 ihre Unterstützung und klappt in die horizontale abgesenkte Spielstellung. Die Magnetbandkassette liegt dabei auf einer Kassettenauflage 331, 331a auf (Fig. 12c).

Das Verschwenken des Kassettenschachtes 321 erfolgt beim Bewegen der Ejectstange 302 über eine nicht dargestellte Kulissenführung. An der oberen Schenkelplatte 323 ist eine Blattfeder 332 befestigt. Das freie Ende 333 der Blattfeder drückt gegen die in den Schacht 321 eingeschobene Kassette 200. In der in Fig. 12c dargestellten Spielstellung hebt sich die Blattfeder 332 aus der Lage nach Fig. 12a bzw. 12b ab und drückt dabei auf die Kassette 200. Dabei wird die Kassette 200 in der Spielstellung sicher festgehalten.

Beim Überführen der Kassette 200 aus der Spielstellung nach Fig. 12c in die Auswerfstellung nach Fig. 12a wird die Kassette 200 zunächst von der unteren Schenkelplatte 324 etwas angehoben, wobei sie unter der Kraft der Feder 332 um einen Punkt z (Fig. 12c) an der unteren Schenkelplatte 324 im Uhrzeigersinn soweit verschwenkt wird, bis die obere Wand 200a der Kassette 200 sich an der oberen Schenkelplatte 323 abstützt (Fig. 12b). Der Schacht 321 verschwenkt dabei in Richtung eines Pfeiles C nach Fig. 12b in die Stellung nach Fig. 12a.

Kurz nachdem sich die untere Wand 200b der Kassette 200 über dem Sattelfalz 327 befindet und die Fangstifte 354 verlassen hat, drückt eine Rückstellkontur 329 die Kassette beim weiteren Klappen des Schachtes in die Ejectstellung in den Sattelfalz hinein. Damit hat die Kassette 200 wieder ihre Auswerfstellung erreicht (Fig. 12a). Mittels des Kassettenhebels 310 kann die Kassette 200 dann aus dem Schacht 321 herausgeschoben werden.

Einzugsvorgang

Solange das Laufwerk außer Betrieb, d. h. keine Kassette eingeschoben ist, sind alle drei Tasten, d. h. die Schnellspultasten 33 und 35 und die Eject-Taste 301 mit ihren Tastenstangen 37, 39 und 302 eingezogen. Eine Möglichkeit des gemeinsamen Einzuges ist in der DE-Patentanmeldung P 39 36 076.8 (PHD 89-194) beschrieben. Beim Eindrücken hat die Ejectstange 302 über einen Mitnehmer (nicht dargestellt) die Schnellspulstangen 37, 39 mitgenommen. Alle drei Tasten 33, 35 und 301 sind also bei ausgeworfener Kassette 200 in das Gerät eingezogen.

Wird nun eine Magnetbandkassette 200 in den Kassettenschacht 321 eingeschoben, dann stößt die Magnetbandkassette 200 mit ihrer Kassettenvorderwand 200c gegen die Nase 362 des Kassettenhebels 310. Der Kassettenmitnehmer 368 klinkt in das Loch 369 des ersten Kassetten-Wickel kernes 361 ein (Fig. 10a). Der Kassettenhebel 310 wird anschließend zwangsweise entgegen dem Uhrzeigersinn verschwenkt um den virtuellen Drehpunkt 363, wobei der Kassettenmitnehmer 368 dadurch, daß er unter eine Abstützung am Kassettenschacht 321 fährt, am Herausgleiten aus dem Wikkelloch 369 gehindert. Der Schwenkstift 364 des Kassettenhebels 310 wandert entlang der Kulissennut 365 und schwenkt den Kulissenhebel 305 im Uhrzeigersinn.

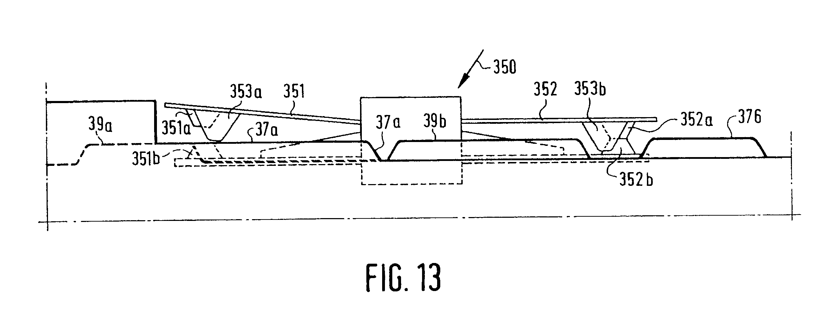

Der im Uhrzeigersinn verschwenkende Kulissenhebel 305 drückt seine Drucklasche 370 gegen einen Nocken 371 des Fanghebels 162, wodurch sich die Fanghebelfeder 163 entgegen dem Uhrzeigersinn vorspannt. Der Riegelnocken 307 des Kulissenhebels 305 wandert auf eine Spitze 372 der Riegellasche 306. In dem Augenblick, in dem der Riegelnocken 307 die Spitze 372 erreicht, stößt die Auswerfhebelkante 373 des Kassettenhebels 310 gegen den Lösestift 138 des Klinkenhebels 131. Damit werden die Schnellspulstangen 37, 39 entrastet; sie fahren mittels der Kraft der auf sie einwirkenden Feder 40 aus. Dabei nehmen die Schnellspulstangen 37, 39 über den Mitnehmer 360 die Ejectstange 302 mit. Ein Schalter 350 (Fig. 13) für den Motor 9 wird von den Schnellspulstangen 37, 39 eingeschaltet. Der Motor 9 läuft an.

Die Riegellasche 306 liegt mit ihrer Auswerfhebelkante 373 gegen den Riegelnocken 307 des Kulissenhebels. Die mit der Ejectstange 302 aus fahrende Riegellasche 306 schwenkt den Kulissenhebel 305 damit im Uhrzeigersinn weiter. Weil die Feder 40 über die Schnellspulstangen 37, 39 die Ejectstange 302 schiebt, dreht im Rahmen der Kraftübertragung nun die Feder 40 den Kassettenhebel 310 bis zum Einzugsende. Die Kassette 200 ist damit eingezogen.

Mit dem Ausfahren der Ejectstange 302 fährt auch der Fanghebel 162 aus. Der Fanghebel 162 entfernt sich von der Drucklasche 370 und wird frei. Die Fanghebelfeder 163 dreht den Fanghebel nun im Uhrzeigersinn, wodurch die Play-Mulde 162a in eine Stellung gelangt, in der sie die Kopfplatte 21 in der Spiel-Stellung arretieren kann.

Über eine nicht dargestellte Kulisse wird der Kassettenschacht 321 im Uhrzeigersinn verschwenkt in die aus Fig. 12c abgesenkte Stellung, wobei die Magnetbandkassette 200 auf die Wickeldorne 330 aufgesetzt wird.

Beim gemeinsamen Ausfahren der Schnellspulstangen 37, 39 wird der Motor 9 über den Schalter 350 eingeschaltet, indem sich beide Kontaktpaare 351a, 351b und 352a, 352b schließen. Damit laufen auch die Tonwellen 13a, 13b an. Das Schlepprad 157 zieht dann auf die beschriebene Weise den Schlepphebel 150 zusammen mit der Kopfplatte 21 in die Spielstellung. Der Fanghebel 162 verriegelt die Kopfplatte in der Spielstellung. Der Spielbetrieb kann beginnen.

## Auswerf-Vorgang

Zum Beenden des Laufwerksbetriebes mit Auswerfen der Magnetbandkassette 200 wird die Eject-Stange 302 völlig eingedrückt. Der Kassettenschacht 321 schwenkt mittels der nicht dargestellten Kulissenführung in die Auswerfstellung nach Fig. 12a. Dabei fahren, mitgenommen von dem Mitnehmer 360, auch die beiden Schnellspultastenstangen 37, 39 in das Laufwerk ein. Da der Fanghebel 162 über seine Achse 162c, die an der Fanghebellasche 303 gelagert ist, mit einfährt, gibt er den Nocken 155 der Kopfplatte 21 frei; die Kopfplatte 21 entrastet. Vor diesem Entrasten haben die Schnellspulstangen 37, 39 am Schalter 350 (Fig. 9a) beide Kontaktsätze 351a, b, 352a, b geöffnet. Der Motor 9 ist stehengeblieben. Die vom Fanghebel 162 entrastete Kopfplatte 21 fährt in die Aufstart- bzw. Eject-Stellung.

Beim Eindrücken der Eject-Stange 302 verläßt die Riegellasche 306 den Riegelnocken 307. Damit kann der Kulissenhebel 305 entgegen dem Uhrzeigersinn verschwenkt werden. Dieses Verschwenken erfolgt über die Kulissenlasche 304, die gegen den Riegelnocken 307 an den Kulissenhebel 305 stößt. Der Kulissenhebel 305 dreht über den in seine Nut 365 eingreifenden Schwenkstift 364 den Kassettenhebel 310 im Uhrzeigersinn. Der Mitnehmer 368 des Kassettenhebels schiebt zusammen mit der Nase 362, die gegen die Kassettenvorderwand 200c stößt, die Kassette 200 nach außen. In der Entnahmestellung ist der Kassettenmitnehmer 368 aus dem Bereich der Abstützung am Kassettenschacht 321 herausgefahren und ist damit nicht mehr verriegelt. Der Auswerfvorgang ist damit beendet, und die Kassette kann entnommen werden.

Der Nocken 371 des Fanghebels 162 stößt kurz vor Erreichen der Ejectstellung des Kassetten-Auswurfmechanismus gegen die Drucklasche 370 des Kulissenhebels 305. Dadurch wird der Fanghebel 162 etwas entgegen dem Uhrzeigersinn gegen die Kraft der Fanghebelfeder 163 verdreht. Der Kulissenhebel 305 und der Kassettenhebel 310 werden damit in Auswurfrichtung vorgespannt.

## Elektrischer Laufwerksschalter

Fig. 13 zeigt den im Bereich der Tastenstangen 37, 39 angeordneten Schalter 350 mit aufeinander zu federnden Kontaktpaare 351a, 351b und 352a, 352b. Der Schalterbetätigung dienen Schaltnocken 353a und 353b, die an den die Kontakte 351a, b und 352a, b tragenden Federarmen 351, 352 befestigt sind. Betätigt wird der Schalter 350 über an den Schnellaufstangen 37, 39 befestigten Stell-Nocken 37a, 37b, 39a und 39b. Diese sind so gegeneinander versetzt angeordnet, daß

a) hei gemeinsam gleichweit eingefahrenen Tastenstangen 37, 38 beider Kontaktpaare 351a, b und 352a, b geöffnet sind,

b) bei ausgefahrenen Tastenstangen 37, 39 beide Kontaktpaare 351a, b und 352a, b geschlossen sind,

c) bei jeweils einer eingefahrenen Tastenstange 37 oder 39 jeweils eines der Kontaktpaare geschlossen und das andere geöffnet ist,

d) bei leichtem Eindrücken einer oder beider Tastenstangen 37, 39 beide Kontaktpaare geöffnet sind.

Sind beide Schnell-Laufstangen 37,39 eingefahren, beispielsweise weil die Eject-Stange 302 sie beim Eindrücken mitgenommen hat, dann sind beide Kontaktpaare 351a,b und 352a,b geöffnet und der Motor 9 ist beim Eject (Auswerfen der Kassette) ausgeschaltet. Dasselbe gilt für die Standby-Stellung, in der beide Schnellspulstangen 37, 39 eingeschoben sind, die Eject-Stange jedoch nicht. Sind alle Tastenstangen 37,39,302 ausgefahren, dann ist der Schalter mittels beider Kontaktpaare 351 a,b und 352a,b geschlossen und der Motor 9 damit eingeschaltet. Je nachdem, welche Schnellspulstange 37 oder 39 für sich allein gedrückt wird, schließt im weiteren Verlauf der Einschubbewegung das eine oder andere Kontaktpaar 351a,b bzw. 352a,b. Dadurch ist elektrisch erkennbar, welche Taste gedrückt wurde. Die jeweilige Schnellaufrichtung kann damit an einem Display erkennbar gemacht werden. Bei der Funktion manuelles Stand-by sind beide Kontaktpaare 351a,b und 352a,b geöffnet.

Ist nur eine oder sind beide Tastenstangen 37, 39 gleichzeitig nur ein wenig eingedrückt, so ist der Laufwerksmotor 9 abgeschaltet. Derartige Fehlbedienungen haben also keine negativen Folgen.

## Manuelles Reversieren

Ohne Verstellung der Kopfplatte 21 ist es möglich, sowohl am Bandende als auch je nach Wunsch durch ein sogenanntes Manual-Reverse die Spielrichtung umzukehren. Die Richtungsumkehr bei Bandende wurde bereits beim Übergang von Fig. 3 nach Fig. 4 anhand der zusätzlichen Fig. 7, 7a und 7b erläutert. Das Manual-Reverse läuft wie folgt ab:

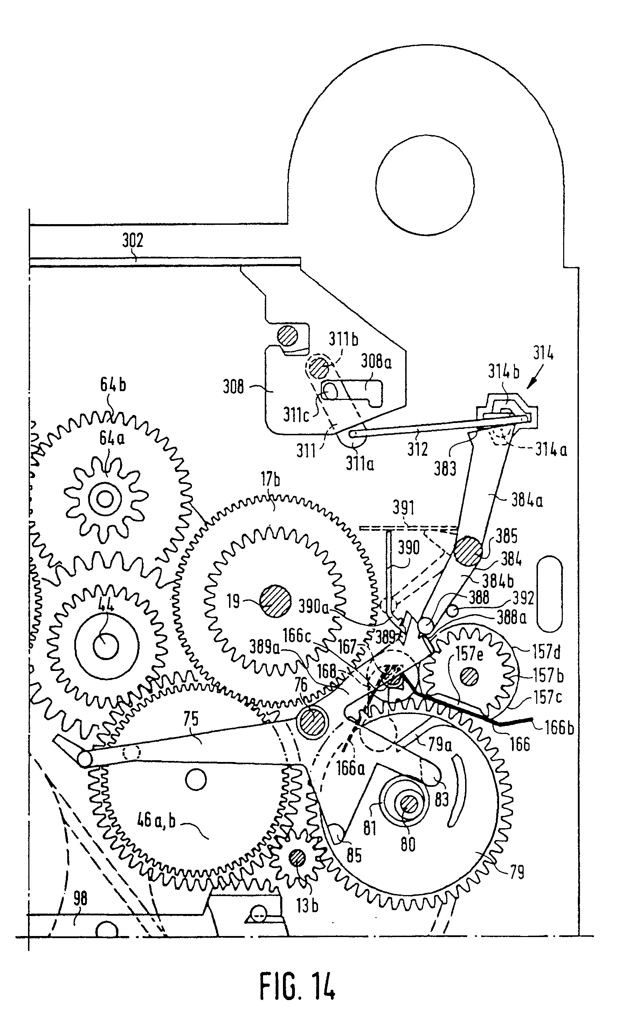

Zum Manual-Reverse wird die Eject-Tastenstange 302 über die Eject-Taste 301 ein Stück eingeschoben. Dabei fährt die Umkehrkralle 312 den Stift 313 von der Einlaufbahn 314c über eine erste Rampe 380 bis in einen hinter dieser Rampe 380 gelegenen ersten vertieften Bereich 381 (Fig. 11). Bei diesem Eindrücken erreicht der Stift 313 höchstens eine zweite Rampe 382, von der er aber zurückläuft in den ersten vertieften Bereich 381. Wird die Eject-Taste 302 nun losgelassen, dann läuft der Stift 313 in der Rückführungsbahn 314a

zurück in die Einlaufbahn 314c. Bei dieser rücklaufenden Bewegung in der ersten Rückführungsbahn 314a stößt der Stift 313 gegen eine Stellfläche 383 eines Umkehrhebels 384, der um eine im Chassis 3 gelagerte Umkehrhebelachse 385 verschwenkbar ist. Der Umkehrhebel 384 ist mehrarmig ausgebildet. Die Stellfläche 383 befindet sich an einem ersten Umkehrarm 384a. Der zweite Umkehrarm 384b trägt einen Stellstift 388 (Fig. 1 und 14). Der Stellstift 388 wirkt mit einem Anschlag 389 des Steuerorganes 77 derart zusammen, daß der Bewegungsraum des Steuerorganes 77 eingeengt wird.

Läuft der Stift 313 auf die Stellfläche 383 des Umkehrhebels 384 auf, dann schwenkt er den Umkehrhebel 384 im Uhrzeigersinn, und der Stellstift 388 rastet in einer Kerbe 390a in der Feder 390 ein. Der Stellstift 388 hat dabei über den Arm 389a das Steuerorgan 77 entgegen dem Uhrzeigersinn verschwenkt. Dies hatte zur Folge, daß der Taster 83 auf die Steuerfläche 84 des Steuerorgans 77 aufläuft, den Richtungsumkehrvorgang einleitet und ausführt. Das Steuerorgan 77 wird durch eine Rückstellwand 79a des Schaltrades 79 zwangsläufig im Uhrzeigersinn gedreht. Dabei löst sich die Verriegelung des Hakens 388a, indem der Anschlag 389 den Stellstift 388 aus der Kerbe 390a herausreißt. Eine Rückstellfeder 391 dreht den Umkehrhebel 384 entgegen dem Uhrzeigersinn zurück gegen einen Anschlag 392 im Chassis. Der Spielbetrieb läuft jetzt in der nun umgekehrten Laufrichtung weiter.

Wird die Auswerfstange 302 zum Auswerfen der Kassette 200 (Eject) vollständig eingeschoben, dann fällt der Stift 313 nach dem Überfahren der höchsten Stelle der zweiten Rampe 382 in einen zweiten vertieften Bereich 381a. Dort bleibt der Stift 313 stehen, alle Tastenstangen 37, 39, 302 sind eingefahren, der Kassettenhebel 310 hat die Kassette 200 ausgeworfen, der Motor 9 steht still. Wird eine Kassette 200 erneut eingeschoben, dann fährt die Ejectstange 302 wieder aus. Der Stift 313 kann jetzt nur über die zweite Rückführungsbahn 314b zum Anfang 314c der Einlaufbahn zurückkehren, und die Richtungsumkehr wird nicht aktiv.

## Manuelles Stand-by

Zum manuellen Stand-by werden beide Schnellspultasten 33, 35 und die entsprechenden Schnellspulstange 37, 39 gemeinsam eingeschoben. Bei diesem Einschieben werden beide Kontaktpaare 351a, b; 352a, b des Schalters 350 geöffnet. Damit bleibt der Motor 9 stehen. Die Kopfplatte 21 wird entrastet, indem Ansätze 401a, b der Schnellspulstangen 37, 39 (Fig. 1 und 3) gegen einen Zapfen 164 an dem Fanghebel 162 stoßen (Fig. 8a) und diesen gegenüber dem Nocken 155 entgegen dem Uhrzeigersinn und der Wirkung der Feder 163 verschwenken. Die Schwenkbewegung wird in der Schnellspulstellung gestoppt, da ein Fanghebel-Nocken 371 gegen die Kulissenkanten 37e, 39e der Schnellspulstange 37, 39 stößt. In dieser Stellung ist der Fanghebel 162 zwischen den Ansätzen 401a, b und den Kulissenkanten 37e, 39e gegen ein Verschwenken blockiert. Die abfallende Kopfplatte 21 bleibt mit dem Nocken 155 an der Schnellspulmulde 162b des Fanghebels hängen (Fig. 8c). Durch das Abfallen der Kopfplatte 21 verläßt der Formnocken 207 der Umkehrplatte 87 die Stellkanten 211a oder 211b des Andruckrollenbügels 203. Beide Andruckrollen 202a oder 202b heben also von den Tonwellen 13a bzw. 13b ab. Damit ist die Stand-by-Stellung erreicht, in der beide Schnellspulstangen 37, 39 eingedrückt von der Klinke 131 verrastet sind. Durch ein Eindrücken der Ejectstange 302 über eine relativ kurze Verschiebestrecke, während der der Stift 313 den ersten vertieften Bereich 381a (Fig. 11) noch nicht erreicht, wird das manuelle Stand-by gelöst, indem eine Kontur 410 an der Mehrfunktionslasche 308 die Klinke 131 über deren Lösestift 138 in die Entraststellung drückt. Die Tastenstangen 37, 39 fahren damit aus, und der Schalter 350 wird wieder geschlossen. Der Motor läuft an. Die Kulissenkanten 37e, 39e geben den Fanghebel 162 frei, so daß dieser über seinen gesamten Schwenkbereich schwenken kann. Durch die rückstellende Kraft der Kopfplattenfeder 21f wird der Nocken 155 aus der Schnellspulmulde 162 gezogen. Der Fanghebel 162 weicht aus, indem er entgegen dem Uhrzeigersinn wegschwenkt. Die Kopfplatte 21 fährt zurück in die Eject-Stellung. Es erfolgt nun das bereits beschriebene Aufstarten mit dem motorgetriebenen Vorziehen der Kopfplatte 21 in die Spielstellung über den schlepphebel 150.

## Schnellspulen

Um den Schnellspulvorgang, der in Verbindung mit den Fig. 2, 3 sowie 5 und 6 bereits beschrieben ist, vornehmen zu können, muß die Kopfplatte 21 in ihre Schnellspulstellung zurückgefahren werden. Zum Einleiten eines Schnellspulvorgangs wird (wie bereits erläutert) eine der Schnellspultasten 37 oder 39 eingedrückt. Der Fanghebel 162 wird dabei von einem der gegen den Zapfen 164 fahrenden Ansätze 401a oder b an der jeweiligen Schnellspulstange 37 oder 39 entgegen dem Uhrzeigersinn gegen die Wirkung der Feder 163 verschwenkt. Die Kulissenkante 37e oder 39e der eingeschobenen Schnellspulstange 37 oder 39 blockiert die Schwenkbewegung des Fanghebels 162 beim Erreichen der Schnellspulstellung.

Durch das Einschieben der gewünschten Schnellspulstange 37, 39 wurde der zentrale Schalthebel 43 über den zweiten Schalthebel 48 nach unten gedrückt und etwas verschwenkt. Damit wurde das Getriebe vom Spiel- in den Schnellspulbetrieb umgeschaltet entsprechend der gerade gewünschten Schnellspulrichtung.

Durch das Einschieben der jeweils nicht eingeschobenen Schnellspulstange wird die zuvor arretierte Schnellspulstange entriegelt und fährt aus. Die Kulissenkante 37e oder 39e gibt den Fanghebel 162 frei, so daß dieser über seinen gesamten Schwenkbereich drehen kann. Die rückstellende Kraft der Kopfplattenfeder 21f zieht den Nocken 155 aus der Schnellspulmulde 162b, und die Kopfplatte 21 fährt zurück in die Aufstart- oder Eject-Stellung, aus der, wie beschrieben, sofort das Aufstarten in den Spiel-Betrieb erfolgt.

Bevorzugte Spielrichtung nach Einschub einer Kassette

Das Laufwerk ist mit einer Einrichtung versehen, die dafür sorgt, daß der Anlauf nach jedem neuen Einschieben einer Kassette in den leeren Kassettenschacht 321 immer in der Normal-Spiel-Richtung erfolgt, wenn also die Kassette 200 nach dem Auswerfen (Eject) ganz aus dem Kassettenschacht 321 entnommen wurde. Verblieb die Kassette 200 im Schacht 321 und wird sie zum erneuten Aufstarten wieder ganz eingeschoben, so spielt das Laufwerk in der zuvor gespielten Richtung weiter.

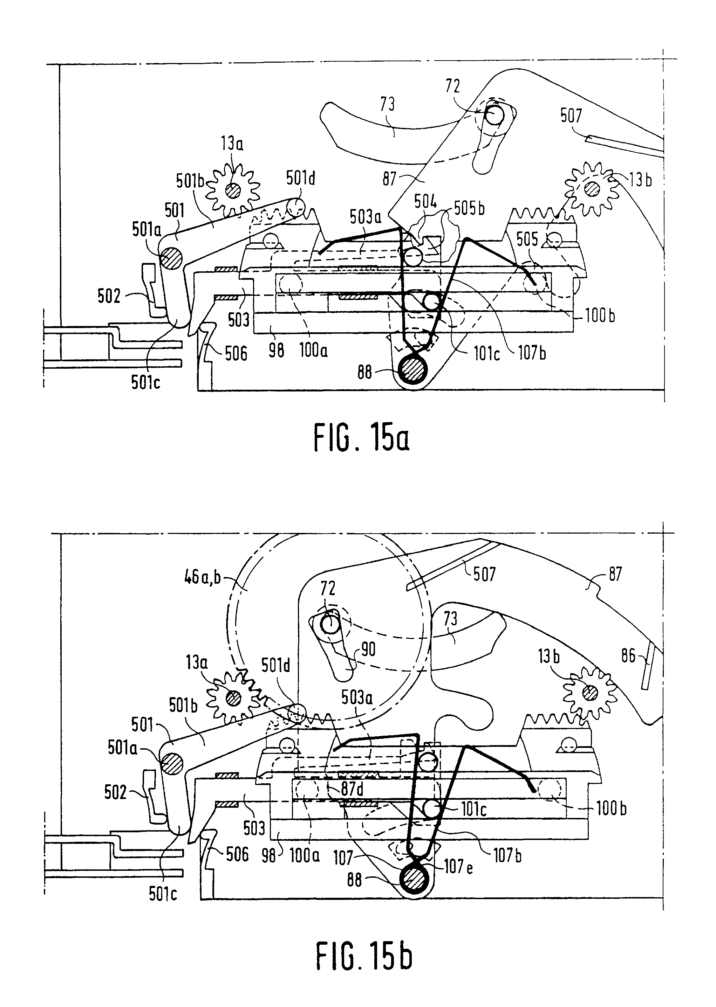

Die Fig. 15a und 15b zeigen die Wirkungsweise dieser Einrichtung. Zu ihr gehört ein Kassettentasthebel 501, der um ein chassisfestes Tastenhebellager 501a verschwenkbar ist. Der Kassettentasthebel 501 hat einen ersten Tastarm 501b und einen zweiten Tastarm 501c. Der erste Tastarm 501b trägt einen Taststift 501d. Der Taststift 501d ist so angeordnet, daß ihn eine eingeschobene Magnetbandkassette 200 beiseite drückt, wodurch der Kassettentasthebel 501 im Uhrzeigersinn verschwenkt.

Auf den Kassettentasthebel 501 wirkt eine Feder 502, die bestrebt ist, ihn entgegen dem Uhrzeigersinn zu verschwenken. Dies ist nur möglich, wenn keine Kassette 200 eingeschoben ist. Es ist ein Stellglied 503 vorgesehen, das mit einem Federarm 503a versehen ist, an dem sich ein Federarmhaken 503b befindet, der hinter einer Chassisnase 504 verhaken kann. Das Stellglied 503 trägt außerdem einen Stellstift 101c, der sich zwischen den Schenkeln 107a, b der Rückstellfeder 107 befindet.

Auf das Stellglied 503 wirkt eine Feder 506, die bestrebt ist, das Stellglied 503 gegen den Tastarm 501c zu drücken und ihn im Uhrzeigersinn zu verschwenken. Dies ist aber nur möglich, wenn der Federarmhaken 503b von der Chassisnase 504 entrastet ist und sich im Kassettenschacht 321 keine Kassette befindet. Dann verschiebt die Feder 506 das Stellglied 503 nach links, und der Kassettentasthebel 501 verschwenkt im Uhrzeigersinn.

Es wird jetzt davon ausgegangen, daß sich das Laufwerk in der Rückwärts-Wiedergabestellung nach Fig. 1 und Fig. 15b befindet. Im Kassettenschacht 321 befindet sich keine Kassette 200. Der Kassettentasthebel ist also entgegen dem Uhrzeigersinn verschwenkt, und der Taststift 501d greift in den leeren Kassettenschacht 321 hinein.

Beim vorangegangenen Abspielvorgang hatte sich der Federarmhaken 503b hinter der Chassisnase 504 verhakt. Dadurch befindet sich das Stellglied 503, arretiert von der Chassisnase 504 und dem Federarmhaken 503b, in der nach rechts verschobenen Stellung. Die Rückstellfeder 107 ist vom nach rechts verschobenen und auf den Schenkel 107b wirkenden Lagerstift 101c im Uhrzeigersinn verschwenkt. Der Schenkel 107a hat über den Mitnehmer die Transportstange 98 nach rechts verschoben. Der Zahnstangenabschnitt 98b ist mit dem Schwungrad-Zahnrad 47h im Eingriff.

Solange keine Kassette 200 in das Laufwerk eingeschoben ist, steht der Antriebsmotor 9 still. Das In-Eingriffkommen von Zahnstangenabschnitt 98b und Schwungscheiben-Zahnrad 47b hat also nur zu einer formschlüssigen Verbindung, jedoch zu keiner weiteren Bewegung geführt. Wird nun eine Kassette 200 in das Laufwerk eingeschoben, wobei der Kassettentasthebel 501 im Uhrzeigersinn verschwenkt und den Kontakt mit dem Stellglied verliert, startet der Motor 9 auf. Das Schwungscheibenzahnrad 47b zieht die Transportstange nach rechts. Der Mitnehmer 100a drückt dabei gegen die Kante 87d der Umkehrplatte 87 und schwenkt diese aus der Rückwärts-Spiel-Stellung in Richtung auf die Vorwärts-Spiel-Stellung. Damit setzt der Richtungsumkehrvorgang ein, bei dem der zentrale Schalthebel 43 aus der Rückwärts-Stellung (Fig. 1 bis 3) in die Vorwärtsstellung (Fig. 4 bis 6) umgelegt wird.

Parallel zum Umkehrvorgang, bei dem der Zentral-Schalthebel 43 entgegen dem Uhrzeigersinn verschwenkt, schwenkt das Kupplungsdoppelrad 46a,b mit dem Zentral-Schalthebel 43 entgegen dem Uhrzeigersinn und stößt gegen den Federarm 503a. Dieser weicht aus, und der Federarmhaken 503b wird bei diesem Ausweichvorgang aus der Arretierstellung hinter der Chassisnase 504 weggedrückt. Das bis dahin in der nach rechts geschobenen Stellung arretierte Stellglied 503 wird nun von der Rückstellfeder 506 nach links verschoben. Damit wird der Kontakt zwischen dem Kassettentasthebel 501 und dem Stellglied 503 wieder hergestellt. Der Lagerstift 101c hebt seine dem Schenkel 107b vorspannende Kraft auf, und der Schenkel 107b schiebt die Transportstange 98 in ihre Mittelstellung zurück auf die im Abschnitt Reversiermechanismus in Verbindung mit Fig. 7a bis 7c beschriebene Weise.

Beim Abschluß der Umkehrbewegung befindet sich das Laufwerk in der Vorwärts-Spiel-Stellung. Die eingeschobene Kassette wird damit in der Vorwärts-Spiel-Stellung abgespielt.

Wird im Rahmen eines Auswerfvorganges, bei dem sich das Laufwerk in Vorwärts-Wiedergabestellung nach Fig. 15a befindet, eine Magnetbandkassette 200 aus dem Laufwerk ausgeschoben und ganz entnommen, dann verschwenkt die Feder 502 den Kassettentasthebel 501 entgegen dem Uhrzeigersinn, und der Taststift 501d schwenkt in den leeren Kassettenschacht 321 ein. Bei diesem Verschwenken, das einem Abfragen des Laufwerkes über das Vorhandensein oder Nicht-Vorhandensein einer eingeschlobenen Kassette gleichkommt, verschiebt der zweite Tastarm 501c das Stellglied 503 parallel zur Verschieberichtung der Transportstange 98. Mit dem Stellglied 503 fährt der Federarm 503a, an dessen Ende sich der Federarmhaken 503b befindet, hinter die Chassisnase 504 des Chassis und verrastet.

Bei dieser Stellung nach Fig. 15a befindet sich die Umkehrplatte 87 in der Stellung für Vorwärts-Spiel-Betrieb. Der Lagerstift 101c hat den Schenkel 107b der Rückstellfeder 107 im Uhrzeigersinn verdrängt und dabei vorgespannt. Der Mitnehmer 100b liegt in einer Mulde 505 der Umkehrplatte 87. Das bedeutet, daß die Transportstange 98 in der in Fig. 15a dargestellten Lage festgelegt ist und die Zahnstange 98b nicht mit dem Schwungscheiben-Zahnrad 47b in Eingriff kommen kann. Es kann also in dem Betriebsfall, in dem sich die Umkehrplatte 87 bereits in der Vorwärts-Spiel-Stellung befindet, bei ausgeschobener Kassette 200 und leerem Kassettenschacht keine unnötige Verstellung der Transportstange 98 geben. Der Mitnehmer 98d der Transportstange bleibt an seinem Platz stehen; lediglich die Schenkel 107a, b spreizen auseinander.

Wird nun bei auf Vorwärts-Spiel-Betrieb geschaltetem Laufwerk eine Kassette in den leeren Kassettenschacht 321 eingeschoben, dann drückt diese Kassette 200 zwar über den Taststift 501d den ersten Tastarm 501b im Uhrzeigersinn beiseite. Die Ausschiebefeder 506 kann aber nicht wirksam werden, um das Stellglied 503 in Richtung auf den zweiten Tastarm 501c auszuschieben, weil der Federarmhaken 503h hinter der Nase 504 verhakt bleibt. Wird also eine Kassette 200 neu eingeschoben, dann beginnt der Spielbetrieb wie gewünscht in der Vorwärts-Spiel-Richtung, wie er zuvor geendet hatte.

Die Fig. 15a und 15b zeigen beide die Wieder-Anlaufrichtung der Laufwerkes nach dem vollständigen Entnehmen einer Kassette 200. Wurde die Kassette 200 nicht entnommen, d. h. sie verblieb im Schacht, dann konnte der Kassettentasthebel 501 keine Bewegungen ausführen und keine Bewegungen auf das Stellglied 503 übertragen. Das bedeutet, daß beim Wieder-Aufstarten des Gerätes, bei dem die Kassette 200 im Kassettenschacht verblieb, das Laufwerk stets in der zuletzt gespielten Spiel-Richtung wieder anläuft.

## Ansprüche

1. Magnetbandkassettengerät mit einem Laufwerk für Magnetbandkassetten, das für Spiel- und Schnellspulbetrieb mit einer ersten und einer gegenläufigen zweiten Bandlaufrichtung ausgelegt ist, wozu außer einem ersten und einem zweiten, wahlweise antreibbaren Wickelteller (17a, 17b) für das Magnetband eine erste und eine zweite, von einem Motor in unterschiedlicher Drehrichtung antreibbare Tonwelle (13a, 13b) vorgesehen sind, und welches Magnetbandkassettengerät einen Umschaltmechanismus (68) mit einer verschieblichen Transportstange (98) aufweist, mittels der der Wickeltellerantrieb zur Änderung der Bandlaufrichtung von einem Wickelteller zum anderen Wickelteller umschaltbar ist, wobei die Transportstange (98) mit in Verschieberichtung auf Abstand angeordneten Zahnstangenabschnitten (98a, 98b) versehen ist, dadurch gekennzeichnet, daß die Zahnstangenabschnitte (98a, 98b) zum Verschieben der Transportstange (98) wahlweise mit gegenläufig umlaufenden Antriebszahnrädern zusammenwirken und daß die Transportstange (98) derart quer zur Verschieberichtung kippbar gelagert ist, daß der jeweilige Zahneingriff zwischen einem Zahnstangenabschnitt (98a, 98b) und einem Antriebszahnrad (47a, 47b) im Endbereich der Verschiebung durch ein Herauskippen der Transportstange (98) aus dem Zahneingriff aufgehoben wird, wobei das Herauskippen und die Rückstellung in eine neutrale Mittelstellung mittels einer Rückstellfeder (107) bewirkt wird, die beim Querverschieben vorgespannt wird.

2. Magnetbandkassettengerät nach Anspruch 1, dadurch gekennzeichnet, daß die Rückstellfeder einen Federarm (107a, 107b) aufweist, der hei seinem Vorspannen gegen einen Druckstift (110a, 110b) der Transportstange in Herauskipprichtung drückt, während ein anderer Federarm (107a, 107b) mittels eines Mitnehmers (98d) der Transportstange in Rückstellrichtung vorgespannt wird.

3. Magnetbandkassettengerät nach Anspruch 1, dadurch gekennzeichnet, daß die Transportstange (98) in ihren axialen Endbereichen mit parallel zu ihrer Längsrichtung und paarweise nebeneinander verlaufenden Leitstiftnuten (102) und Kippnuten (103) versehen ist, die derart miteinander verbunden sind, daß ein beim Querverschieben in eine Leitstiftnut (102) eingelaufener Leitstift (101a, 102b) im vorgesehenen Kippbereich von der Leitstiftnut (102) in die Kippnut (103) überwechselt, wobei die Transportstange (98) zum Aufheben des Zahneingriffs einerseits durch austreibende Verzahnungskräfte und andererseits unter der Kraft der Rückstellfeder (107) verkippt.

4. Magnetbandkassettengerät nach Anspruch 2, dadurch gekennzeichnet, daß die Rückstellfeder (107) als Haarnadelfeder ausgebildet ist, deren Schenkel (107a, 107b), vom Nadelbogen (107e) aus gesehen, zunächst einen Lagerstift (101c) und in einem Abstand von diesem einen Transportstangenmitnehmer (89d) umfassen.

5. Magnetbandkassettengerät nach Anspruch 4, dadurch gekennzeichnet, daß die Schenkel (107a, 107h) mit Auslegern (107c, 107d) versehen sind, die mit das Kippen unterstützenden Druckstiften (110a, 110b) der Transportstange (98) zusammenwirken.

6. Magnetbandkassettengerät nach einem der Ansprüche 1 bis 5, dadurch gekennzeichnet, daß an der Transportstange (98) ein Richtstück (111) vorgesehen ist, das mit gerätefesten Leitstücken (112, 113) derart zusammenwirkt, daß das Richtstück (111) die Rückstellbewegung der Transportstange (98), bevor diese ihre neutrale Mittelstellung erreicht, durch Anschlagen an die Leitstücke (112, 113) abbremst, wodurch die Rückstellfeder eine drehende Wirkung auf die Transportstange ausübt und diese in die unverschwenkte Normallage zurückschwenkt, in der die Anschlagwirkung verlorengeht und die Transportstange dann in ihre neutrale Mittelstellung geschoben und verriegelt werden kann.

FIG. 1a

FIG 1b

FIG. 1c

FIG. 2a

FIG. 2b

FIG.3a

FIG. 3b

FIG. 4a

FIG.4b

FIG.5a

FIG.5b

FIG. 6a

FIG. 6b

FIG. 7

FIG. 7a

FIG. 7b

FIG. 7c

FIG. 7d

33

FIG. 7e

FIG. 7f

FIG. 8a

FIG. 8b

FIG. 8c

EP 0 432 816 A2

FIG. 9a

FIG. 9b

FIG.10a

FIG.10b

FIG.11

EP 0 432 816 A2

FIG. 12a

FIG. 12b

FIG. 12c

FIG. 13

FIG. 14

FIG. 15a

FIG. 15b